(19) Europäisches Patentamt
European Patent Office
Office européen des brevets

(11) **EP 1 117 699 B1**

(12) **EUROPÄISCHE PATENTSCHRIFT**

(45) Veröffentlichungstag und Bekanntmachung des Hinweises auf die Patenterteilung:
**29.09.2004 Patentblatt 2004/40**

(21) Anmeldenummer: **99940001.3**

(22) Anmeldetag: **13.07.1999**

(51) Int Cl.[7]: **C08F 4/02**, C08F 10/00, B01J 37/02

(86) Internationale Anmeldenummer:
**PCT/EP1999/004906**

(87) Internationale Veröffentlichungsnummer:
**WO 2000/005277 (03.02.2000 Gazette 2000/05)**

(54) **VERFAHREN ZUR HERSTELLUNG EINES METALLHALTIGEN TRÄGERKATALYSATORS ODER EINER TRÄGERKATALYSATORKOMPONENTE DURCH TRÄNKUNG EINER TRÄGERSUBSTANZ**

METHOD FOR PRODUCING A SUPPORTED CATALYST WHICH CONTAINS METAL, OR A SUPPORTED CATALYST CONSTITUENT BY IMPREGNATING A SUPPORTING MATERIAL

PROCEDE DE PRODUCTION D'UN CATALYSEUR SUPPORTE CONTENANT DU METAL OU D'UN COMPOSANT DE CATALYSEUR SUPPORTE PAR IMPREGNATION D'UN MATERIAU SUPPORT

(84) Benannte Vertragsstaaten:
**AT BE CH CY DE DK ES FI FR GB GR IE IT LI LU MC NL PT SE**

(30) Priorität: **23.07.1998 DE 19833170**

(43) Veröffentlichungstag der Anmeldung:
**25.07.2001 Patentblatt 2001/30**

(73) Patentinhaber: **Basell Polyolefine GmbH
50389 Wesseling (DE)**

(72) Erfinder:
- **FISCHER, David
D-67725 Breunigweiler (DE)**
- **BIDELL, Wolfgang
D-67112 Mutterstadt (DE)**
- **MOLL, Ulrich
F-13410 Lambesc (FR)**
- **RÖSCH, Joachim
D-67063 Ludwigshafen (DE)**
- **LANGHAUSER, Franz
D-67152 Ruppertsberg (DE)**
- **HINGMANN, Roland
D-68526 Ladenburg (DE)**
- **GREGORIUS, Heike
D-56288 Bubach (DE)**
- **SÜLING, Carsten
D-67227 Frankenthal (DE)**
- **SCHWEIER, Günther
D-67159 Friedelsheim (DE)**

(56) Entgegenhaltungen:
**EP-A- 0 773 064**
**WO-A-96/16093**
**US-A- 4 072 630**
**US-A- 4 292 205**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung ist ein Verfahren zur Herstellung eines metallhaltigen Trägerkatalysators oder einer Trägerkatalysatorkomponente durch Tränkung einer Trägersubstanz.

Weiterhin ist Gegenstand der vorliegenden Erfindung ein metallhaltiger Trägerkatalysator oder eine metallhaltige Trägerkatalysatorkomponente, erhältlich nach diesem Verfahren, sowie ein Verfahren zur Herstellung von Polymeren, welchen Monomere mit C-C-Doppel- und/oder C-C-Dreifachbindung zugrunde liegen.

Trägerkatalysatoren sind bekannt und finden in weiten Bereichen der Technik ihre Anwendung. Beispielsweise werden sie in Verfahren zur Herstellung niedermolekularer organischer Chemikalien und Zwischenprodukte eingesetzt.

Ein weiteres wichtiges Anwendungsgebiet von metallhaltigen Trägerkatalysatoren ist die Herstellung von Polymeren insbesondere Polyolefinen und Styrolpolymeren. Vorzugsweise wird hierbei in der Gasphase oder in Suspension polymerisiert. Die verwendeten Katalysatoren sind beispielsweise Ziegler-Katalysatoren oder Metallocenkatalysatoren. Als Metallocenkatalysatoren werden im folgenden solche verstanden, welche einen Metallkomplex, vorzugsweise Übergangsmetallkomplex enthalten , der mindestens einen Liganden trägt, welcher wiederum eine Cyclopentadienyltyp-Struktureinheit enthält. Beispiele für solche verbrückten und unverbrückten Liganden sind substituierte und unsubstituierte Cyclopentadienylliganden, substituierte und unsubstituierten Indenylliganden oder substituierte oder unsubstituierte Fluorenylliganden. Metallkomplexe mit derartigen Liganden sind bekannt und beispielsweise in J. Macromol Sci - Rev. Macromol Chem. Phys., C34, Seite 439 - 514 (1994) beschrieben.

Verfahren zur Herstellung von metallhaltigen Trägerkatalysatoren sind bekannt. Hierbei wird angestrebt, daß

a) alle Trägerpartikel mit dem Übergangsmetall beladen werden, daß

b) innerhalb der beladenen Trägerpartikel keine Konzentrationsunterschiede der Metallkomponente auftreten und

c) daß alle Partikel die gleiche Konzentration an Metallkomponente haben (mg Metall/Menge Partikel).

Nach derzeitigem Kenntnisstand sollte ein solcher Idealkatalysator beispielsweise für die Olefinpolymerisation gut geeignet sein, da er unter anderem kein Zusammensintern der Polymerisatkörner im Reaktor (Brockenbildung) und keine Überhitzung der Katalysatorpartikel mit dadurch bedingter Desaktivierung des Katalysators aufweist.

Nach einer bekannten Methode können beispielsweise Metallocen-Trägerkatalysatoren durch Zusammenfügen einer metallocenhaltigen Lösung mit der Trägersubstanz, Rühren der Suspension und Entfernen des Lösungsmittels bei Unterdruck erhalten werden (WO-A 94/28034). Das Lösungsvolumen der Tränklösung ist hier viel größer als das Porenvolumen der unbehandelten Trägersubstanz, so daß eine gut rührbare Suspension entsteht. Mit diesem Verfahren kann wohl die Metallocenkomponente vollständig auf den Träger aufgebracht werden, jedoch führt der Katalysator, besonders bei hoher Beladung, im Polymerisationsprozeß zu Schwierigkeiten, wie Brockenbildung.

In einem weiteren Trägerungsverfahren für Metallocenkatalysatoren wird die Metallocentränklösung mit der Trägersubstanz vereinigt, wobei das Volumen der Tränklösung höchsten so groß ist wie das Porenvolumen der Trägersubstanz. Hierbei entsteht eine pastöse Masse von der das Lösungsmittel entfernt wird (WO-A 94/14856). Ein Nachteil dieses Verfahrens ist, daß die Beladung der Trägersubstanz mit schwer löslichen Metallocenen, bedingt durch die kleine Lösungsmittelmenge, unbefriedigend ist, die Produktivität des Katalysators gering und die Wirtschaftlichkeit des Polymerisationsverfahrens noch unbefriedigend ist.

In einer dritten Trägerungsmethode wird das Metallocen, welches in einem guten Lösungsmittel gelöst ist mit einem schlechten Lösungsmittel in Gegenwart der Trägersubstanz auf deren Oberfläche und in deren Poren ausgefällt (EP-A 0 295 312, WO 98/01481). Ein Nachteil dieses Verfahrens ist, daß man große Mengen Fällungslösungsmittel (Nichtlöser) braucht, um die Metallocenkomponente auf und in der Trägersubstanz abzuscheiden. Zur Herstellung von Katalysatoren ist man in der Praxis darauf angewiesen die Nichtlöser-Menge zu beschränken, dadurch wertvolle Metallocenkomponente in Lösung zu belassen und daher für die Trägerung zu verlieren. Dieses Verfahren ist bezüglich der Raum-Zeit-Ausbeute an Katalysator und Wirtschaftlichkeit unbefriedigend.

WO 96/16093 beschreibt ein Verfahren zur Herstellung eines Trägerkatalysators, wobei eine Tränklösung eines Metallocenkatalysators, deren Volumen das 1,5 bis 4fache des Porenvolumens des Trägers beträgt, mit der Trägersubstanz vermischt und das Lösungsmittel abgezogen wird.

US-A 4 292 205 beschreibt ein Verfahren zur Herstellung eines metallhaltigen Trägerkatalysators, wobei eine Tränklösung einer Metallverbindung ein Trägerbett aufwärts durchströmt und eine gute Durchmischung des Trägerbetts erreicht wird.

Der vorliegenden Erfindung lag daher die Aufgabe zugrunde ein wirtschaftlicheres Verfahren zur Herstellung von metallhaltigen Trägerkatalysatoren, insbesondere Metallocenkatalysatoren zur Verfügung zu stellen welches hohe Raum-Zeit-Ausbeuten hat. Das Verfahren sollte universell verwendbar sein, das heißt sehr unterschiedlich lösliche

Metallocenkomplexe, insbesondere schlechter lösliche Metallocenkomplexe, sollten noch zu einer hohen Beladung des Trägerkatalysators führen. Weiterhin sollte der Katalysator, insbesondere der Metallocenkatalysator, die Metallkomponente in einer derartigen Verteilung über das Volumen der Trägerpartikel enthalten, daß er hohe Katalysatorproduktiyitäten (g Polymer/ g Katalysatorfeststoff) bei guter Polymerisatmorphologie liefert (praktisch keine Brocken- und Feinststaubbildung). Weiterhin sollte ein verbesserter Katalysator, sowie ein verbessertes Polymerisationsverfahren unter Verwendung des verbesserten Katalysators zur Verfügung gestellt werden.

Demgemäß wurde ein Verfahren zur Herstellung eines metallhaltigen Trägerkatalysators für Polymerisationsverfahren oder einer metallhaltigen Trägerkatalysatorkomponente für Polymerisationsverfahren mit einer unterschiedlichen Beladungshöhe der einzelnen Trägerkatalysatorpartikel oder Trägerkatalysatorkomponentenpartikel durch Tränkung einer Trägersubstanz mit einer Tränklösung, die die Metallkomponente enthält, dadurch gekennzeichnet, daß die Tränklösung die Trägersubstanz in gerichteter Strömung durchströmt und das Volumen der Tränklösung mindestens das 1,5-fache des Porenvolumens des Trägers beträgt, gefunden. Weiterhin wurden auch ein metallhaltiger Trägerkatalysator oder eine metallhaltige Trägerkatalysatorkomponente nach Anspruch 8 oder 9, erhältlich nach diesem Verfahren, und ein Verfahren zur Herstellung von Polymeren, welchen Monomeren mit C-C-Doppelbindung und/ oder C-C-Dreifachbindung zugrunde liegen, durch Polymerisation dieser Monomeren in Gegenwart eines metallhaltigen Trägerkatalysators oder einer metallhaltigen Trägerkatalysatorkomponente, die erhältlich sind nach dem erfindungsgemäßen Verfahren, gefunden.

Als Metallkomponente des erfindungsgemäßen Verfahrens oder Katalysators kommen generell alle Hauptgruppen- oder Übergangsmetallverbindungen in Frage, welche in organischen Lösungsmitteln oder Wasser oder deren Gemisch praktisch vollständig löslich oder/und fein dispergierbar sind.

Gut geeignete Hauptgruppenmetallverbindungen sind beispielsweise Halogenide, Sulfate, Nitrate $C_1$-$C_{10}$-Alkyle, $C_6$-$C_{20}$-Aryle, $C_1$-$C_{10}$-Alkoxide, $C_6$-$C_{20}$-Aryloxide von Metallen oder Halbmetallen der 1. bis 5. Hauptgruppe des Periodensystems.

Gut geeignete Übergangsmetallverbindungen sind beispielsweise Halogenide, Sulfate, Nitrate $C_1$-$C_{10}$-Alkyle, $C_6$-$C_{20}$-Aryle, $C_1$-$C_{10}$-Alkoxide, $C_6$-$C_{20}$-Aryloxide der Übergangsmetalle.

Vorzugsweise verwendet man Organoübergangsmetallverbindungen wie Verbindungen A) als Metallkomponente.

Gut geeignete Übergangsmetallverbindungen A) sind zum Beispiel Übergangsmetallkomplexe mit einem Liganden der allgemeinen Formeln F-I bis F-V

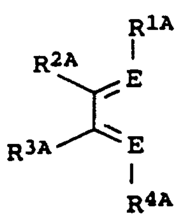

F-I

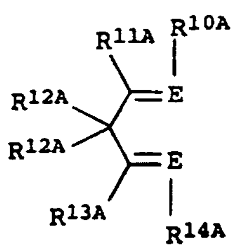

F-III

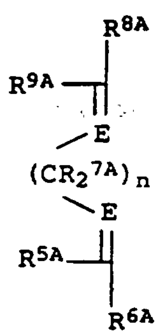

F-II

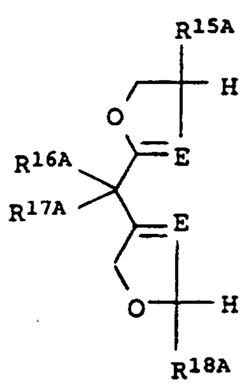

F-IV

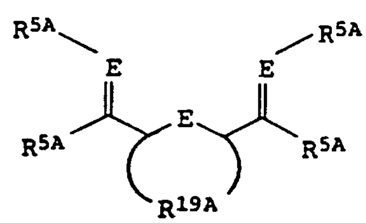

F-V

wobei das Übergangsmetall ausgewählt ist aus den Elementen Ti, Zr, Hf, Sc, V, Nb, Ta, Cr, Mo, W, Fe, Co, Ni, Pd, Pt oder ein Element der Seltenerd-Metalle. Bevorzugt sind hierbei Verbindungen mit Nickel, Eisen, Kobalt und Palladium als Zentralmetall.

E ist ein Element der Gruppe 15 des Periodensystems der Elemente (5. Hauptgruppe), bevorzugt N oder P, wobei N besonders bevorzugt ist. Die beiden Atome E in einem Molekül können dabei gleich oder verschieden sein.

Die Reste $R^{1A}$ bis $R^{19A}$, die gleich oder verschieden sein können, stehen dabei für folgende Gruppen:

| | |
|---|---|
| $R^{1A}$ und $R^{4A}$: | unabhängig voneinander für Kohlenwasserstoff- oder substituierte Kohlenwasserstoffreste, bevorzugt sind dabei Kohlenwasserstoffreste bei denen das dem Element E benachbarte Kohlenstoffatom mindestens mit zwei Kohlenstoffatomen verbunden ist. |
| $R^{2A}$ und $R^{3A}$: | unabhängig voneinander für Wasserstoff, Kohlenwasserstoff- oder substituierte Kohlenwasserstoffreste, $R^{2A}$ und $R^{3A}$ können auch zusammen ein Ringsystem bilden in dem auch ein oder mehrere Heteroatome vorhanden sein können. |
| $R^{6A}$: | für Kohlenwasserstoff- oder substituierte Kohlenwasserstoffreste, |
| $R^{5A}$: | für Wasserstoff, Kohlenwasserstoff- oder substituierte Kohlenwasserstoffreste, |
| $R^{6A}$ und $R^{5A}$ | können auch zusammen ein Ringsystem bilden. |
| $R^{8A}$: | für Kohlenwasserstoff- oder substituierte Kohlenwasserstoffreste, |
| $R^{9A}$: | für Wasserstoff, Kohlenwasserstoff- oder substituierte Kohlenwasserstoffreste, |
| $R^{8A}$ und $R^{9A}$ | können auch zusammen ein Ringsystem bilden. |
| $R^{7A}$: | unabhängig voneinander für Wasserstoff, Kohlenwasserstoff- oder substituierte Kohlenwasserstoffreste, zwei $R^{7A}$ können auch zusammen ein Ringsystem bilden. n ist eine ganze Zahl zwischen 1 und 4 bevorzugt 2 oder 3. |
| $R^{10A}$ und $R^{14A}$: | unabhängig voneinander für Wasserstoff, Kohlenwasserstoff- oder substituierte Kohlenwasserstoffreste |
| $R^{11A}$,$R^{12A}$ und $R^{13A}$: | unabhängig voneinander für Wasserstoff, Kohlenwasserstoff oder substituierte Kohlenwasserstoffreste, hierbei können auch zwei oder mehr Reste $R^{11A}$, $R^{12A}$ und $R^{13A}$ zusammen ein Ringsystem bilden. |
| $R^{15A}$ und $R^{18A}$: | unabhängig voneinander für Wasserstoff, Kohlenwasserstoff- oder substituierte Kohlenwasserstoffreste |
| $R^{16A}$ und $R^{17A}$: | unabhängig voneinander für Wasserstoff, Kohlenwasserstoff- oder substituierte Kohlenwasserstoffreste |
| $R^{19A}$: | ein organischer Rest, der ein 5- bis 7-gliedriges substituiertes oder unsubstituiertes, insbesondere ungesättigtes oder aromatisches heterocyclisches Ringsystem bilden kann. |

Besonders geeignete Verbindungen F-I bis F-IV sind z.B.:

Di(2,6-di-i-propyl-phenyl)-2,3-dimethyl-diazabutadien-palladium-dichlorid
Di(di-i-propyl-phenyl)-2,3-dimethyl-diazabutadien-nickel-dichlorid
Di(2,6-di-i-propyl-phenyl)-dimethyl-diazabutadien-palladium-dimethyl
Di(2,6-di-i-propyl-phenyl)-2,3-dimethyl-diazabutadien-nickel-dimethyl
Di(2,6-dimethyl-phenyl)-2,3-dimethyl-diazabutadien-palladium-dichlorid
Di(2,6-dimethyl-phenyl)-2,3-dimethyl-diazabutadien-nickel-dichlorid
Di(2,6-dimethyl-phenyl)-2,3-dimethyl-diazabutadien-palladium-dimethyl
Di(2,6-dimethyl-phenyl)-2,3-dimethyl-diazabutadien-nickel-dimethyl
Di(2-methyl-phenyl)-2,3-dimethyl-diazabutadien-palladium-dichlorid
Di(2-methyl-phenyl)-2,3-dimethyl-diazabutadien-nickel-dichlorid
Di(2-methyl-phenyl)-2,3-dimethyl-diazabutadien-palladium-dimethyl
Di(2-methyl-phenyl)-2,3--dimethyl-diazabutadien-nickel-dimethyl
Diphenyl-2,3-dimethyl-diazabutadien-palladium-dichlorid
Diphenyl-2,3-dimethyl-diazabutadien-nickel-dichlorid
Diphenyl-2,3-dimethyl-diazabutadien-palladium-dimethyl
Diphenyl-2,3-dimethyl-diazabutadien-nickel-dimethyl
Di(2,6-dimethyl-phenyl)-azanaphten-palladium-dichlorid
Di(2,6-dimethyl-phenyl)-azanaphten-nickel-dichlorid
Di(2,6-dimethyl-phenyl)-azanaphten-palladium-dimethyl
Di(2,6-dimethyl-phenyl)-azanaphten-nickel-dimethyl
1,1'-Dipyridyl-palladium-dichlorid
1,1'-Dipyridyl-nickel-dichlorid

1,1'-Dipyridyl-palladium-dimethyl
1,1'-Dipyridyl-nickel-dimethyl

Besonders geeignete Verbindungen F-V sind solche, die in J. Am. Chem. Soc. 120, S. 4049 ff. (1998), J. Chem. Soc., Chem. Commun. 1998, 849 beschrieben sind.

Besonders gut geeignete Übergangsmetallverbindungen A) sind weiterhin solche mit mindestens einem Cyclopentadienyltyp-Liganden, die gemeinhin als Metallocenkomplexe (zwei und mehr Cyclopentadienyltyp-Liganden) oder Halbsandwich-Komplexe (ein Cyclopentadienyltyp-Ligand) bezeichnet werden. Hierbei eignen sich besonders solche der allgemeinen Formel I,

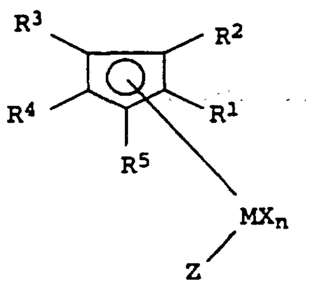

I

in der die Substituenten folgende Bedeutung haben:

M Titan, Zirkonium, Hafnium, Vanadium, Niob oder Tantal, sowie Elemente der III. Nebengruppe des Periodensystems und der Lanthanoiden,

X Fluor, Chlor, Brom, Iod, Wasserstoff, $C_1$- bis $C_{10}$-Alkyl, $C_6$- bis $C_{15}$-Aryl, Alkylaryl mit 1 bis 10 C-Atomen im Alkylrest und 6 bis 20 C-Atomen im Arylrest, $-OR^6$ oder $-NR^6R^7$,

n eine ganze Zahl zwischen 1 und 3, wobei n der Wertigkeit von M minus der Zahl 2 entspricht,

wobei

$R^6$ und $R^7$ $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,

$R^1$ bis $R^5$ Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder $Si(R^8)_3$ mit

$R^8$ $C_1$- bis $C_{10}$-Alkyl, $C_3$- bis $C_{10}$-Cycloalkyl oder $C_6$- bis $C_{15}$-Aryl,

Z für X oder

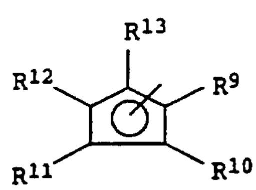

steht,

wobei die Reste

$R^9$ bis $R^{13}$ Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder $Si(R^{14})_3$ mit

$R^{14}$ $C_1$- bis $C_{10}$-Alkyl, $C_6$- bis $C_{15}$-Aryl oder $C_3$- bis $C_{10}$-Cycloalkyl,

oder wobei die Reste $R^4$ und Z gemeinsam eine Gruppierung $-R^{15}$-A-bilden, in der

$R^{15}$

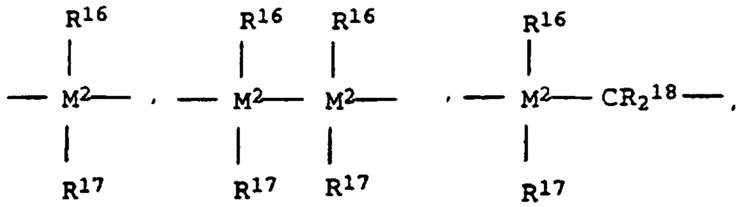

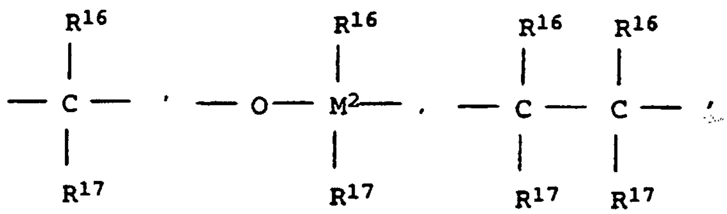

$= BR^{16}$, $= AlR^{16}$, -Ge-, -Sn-, -O-, -S-, = SO, $= SO_2$, $= NR^{16}$, = CO, $= PR^{16}$ oder $= P(O)R^{16}$ ist, wobei

$R^{16}$, $R^{17}$ und $R^{18}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder wobei zwei benachbarte Reste jeweils mit den sie verbindenden Atomen einen Ring bilden, und

$M^2$ Silicium, Germanium oder Zinn ist,

A

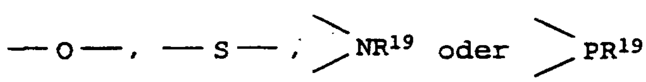

bedeuten,
mit

$R^{19}$ $C_1$- bis $C_{10}$-Alkyl, $C_6$- bis $C_{15}$-Aryl, $C_3$- bis $C_{10}$-Cycloalkyl, Alkylaryl oder $Si(R^{20})_3$,

$R^{20}$ Wasserstoff, $C_1$- bis $C_{10}$-Alkyl, $C_6$- bis $C_{15}$-Aryl, das seinerseits mit $C_1$- bis $C_4$-Alkylgruppen substituiert sein kann oder $C_3$- bis $C_{10}$-Cycloalkyl

oder wobei die Reste $R^4$ und $R^{12}$ gemeinsam eine Gruppierung $-R^{15}$- bilden.

Von den Metallocenkomplexen der allgemeinen Formel I sind

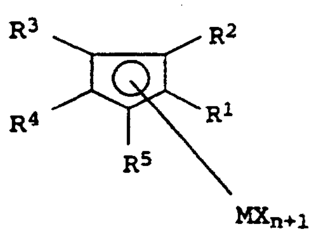

Ia,

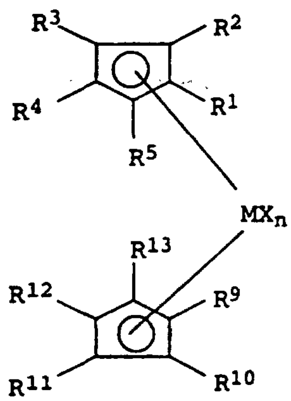

Ib,

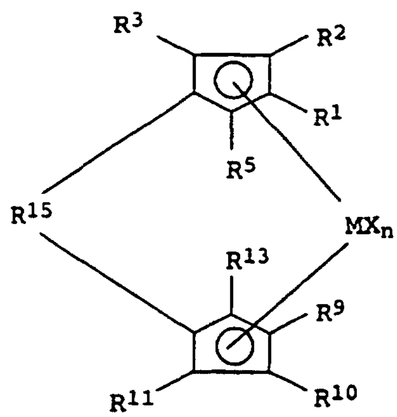

Ic

und

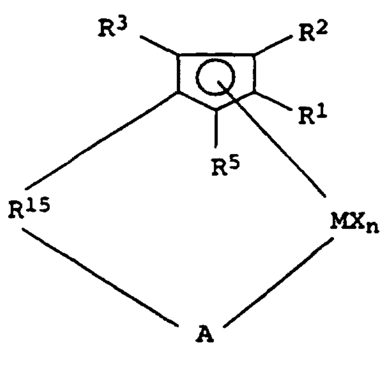

Id

bevorzugt.

Die Reste X können gleich oder verschieden sein, bevorzugt sind sie gleich.

Von den Verbindungen der Formel Ia sind insbesondere diejenigen bevorzugt, in denen

| | |
|---|---|
| M | Titan, Zirkonium oder Hafnium, |
| X | Chlor, $C_1$-bis $C_4$-Alkyl oder Phenyl, |
| n | die Zahl 2 und |
| $R^1$ bis $R^5$ | Wasserstoff oder $C_1$- bis $C_4$-Alkyl bedeuten. |

Von den Verbindungen der Formel Ib sind als bevorzugt diejenigen zu nennen, bei denen

| | |
|---|---|
| M | für Titan, Zirkonium oder Hafnium steht, |
| X | Chlor, $C_1$-bis $C_4$-Alkyl oder Phenyl, |
| n | die Zahl 2, |
| $R^1$ bis $R^5$ | Wasserstoff, $C_1$- bis $C_4$-Alkyl oder $Si(R^8)_3$, |
| $R^9$ bis $R^{13}$ | Wasserstoff, $C_1$- bis $C_4$-Alkyl oder $Si(R^{14})_3$ bedeuten. |

Insbesondere sind die Verbindungen der Formel Ib geeignet, in denen die Cyclopentadienylreste gleich sind.

Beispiele für besonders geeignete Verbindungen sind u.a.:

Bis (cyclopentadienyl)zirkoniumdichlorid,
Bis (pentamethylcyclopentadienyl)-zirkoniumdichlorid,
Bis (methylcyclopentadienyl)-zirkoniumdichlorid,
Bis (ethylcyclopentadienyl)-zirkoniumdichlorid,
Bis (n-butylcyclopentadienyl)-zirkoniumdichlorid und
Bis (trimethylsilylcyclopentadienyl)-zirkoniumdichlorid

sowie die entsprechenden Dimethylzirkoniumverbindungen.

Von den Verbindungen der Formel Ic sind diejenigen besonders geeignet, in denen

| | |
|---|---|
| $R^1$ und $R^9$ | gleich sind und für Wasserstoff oder $C_1$- bis $C_{10}$-Alkylgruppen stehen, |
| $R^5$ und $R^{13}$ | gleich sind und für Wasserstoff, eine Methyl-, Ethyl-, iso-Propyl- oder tert.-Butylgruppe stehen, |
| $R^2$, $R^3$, $R^{10}$ und $R^{11}$ | die Bedeutung<br>$R^3$ und $R^{11}$ $C_1$- bis $C_4$-Alkyl<br>$R^2$ und $R^{10}$ Wasserstoff<br>haben oder zwei benachbarte Reste $R^2$ und $R^3$ sowie $R^{10}$ und $R^{11}$ gemeinsam für 4 bis 20 C-Atome aufweisende cyclische Gruppen stehen, |
| $R^{15}$ | für |

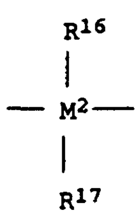

oder

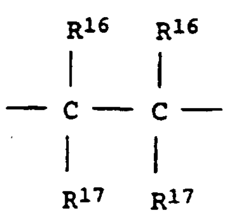

steht,

M für Titan, Zirkonium oder Hafnium und

$M^2$ für Silicium

X für Chlor, $C_1$- bis $C_4$-Alkyl oder Phenyl stehen.

Beispiele für besonders geeignete Komplexverbindungen Ic sind u.a.
Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Tetramethylethylen-9-fluorenylcyclopentadienylzirkoniumdichlorid, Dimethylsilandiylbis(-3-tert.butyl-5-methylcyclopentadienyl)-zirkoniumdichlorid, Dimethylsilandiylbis(-3-tert. butyl-5-ethylcyclopentadienyl)-zirkoniumdichlorid, Dimethylsilandiylbis(-2-methylindenyl)-zirkoniumdichlorid, Dimethylsilandiylbis(-2-isopropylindenyl)-zirkoniumdichlorid, Dimethylsilandiylbis(-2-tert.butylindenyl)-zirkoniumdichlorid, Diethylsilandiylbis(-2-methylindenyl)-zirkoniumdibromid, Dimethylsilandiylbis(-3-methyl-5-methylcyclopentadienyl)-zirkoniumdichlorid, Dimethylsilandiylbis(-3-ethyl-5-isopropylcyclopentadienyl)-zirkoniumdichlorid, Dimethylsilandiylbis(-2-ethylindenyl)-zirkoniumdichlorid, Dimethylsilandiylbis(-2-methylbenzindenyl)-zirkoniumdichlorid Dimethylsilandiylbis(2-ethylbenzindenyl)zirkoniumdichlorid, Methylphenylsilandiylbis(2-ethylbenzindenyl)zirkoniumdichlorid, Methylphenylsilandiylbis(2-methylbenzindenyl)zirkoniumdichlorid, Diphenylsilandiylbis(2-methylbenzindenyl)zirkoniumdichlorid, Diphenylsilandiylbis (2-ethylbenzindenyl)zirkoniumdichlorid, und Diphenylsilandiylbis(-2-methylindenyl)-hafniumdichlorid sowie die entsprechenden Dimethylzirkoniumverbindungen.

Weitere Beispiele für geeignete Komplexverbindungen Ic sind u.a.
Dimethylsilandiylbis(-2-methyl-4-phenylindenyl)zirkoniumdichlorid, Dimethylsilandiylbis(-2-methyl-4-[1-naphthylindenyl])zirkoniumdichlorid, Dimethylsilandiylbis(-2-methyl-4-isopropylindenyl)zirkoniumdichlorid, Dimethylsilandiylbis(-2-methyl-4,6-diisopropylindenyl)zirkoniumdichlorid, Dimethylsilandiylbis-(2-ethyl-4-phenylindenyl)zirkoniumdichlorid, Dimethylsilandiylbis-(2-methyl-4-(para-4-butyl)-phenylindenyl)zirkondichlorid, sowie die entsprechenden Dimethylzirkoniumverbindungen.

Bei den Verbindungen der allgemeinen Formel Id sind als besonders geeignet diejenigen zu nennen, in denen

M für Titan oder Zirkonium,

X für Chlor, $C_1$-bis $C_4$-Alkyl oder Phenyl stehen.

$R^{15}$ für

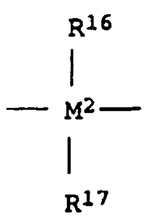 oder 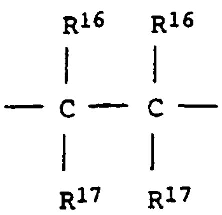

steht,

A für

$-O-$, $-S-$, 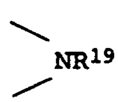

und

$R^1$ bis $R^3$ und $R^5$ für Wasserstoff, $C_1$- bis $C_{10}$-Alkyl, $C_3$- bis $C_{10}$-Cycloalkyl, $C_6$- bis $C_{15}$-Aryl oder $Si(R^8)_3$ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallkomplexe A), insbesondere verschiedener Metallocenkomplexe eingesetzt werden.

Die Tränklösung wird in der Regel durch Lösen oder Suspendieren der Metallkomponente, vorzugsweise der Übergangsmetallkomponente, insbesondere der Metallocenkomplexverbindung I und gegebenenfalls anderen Zusatzstoffen, wie Cokatalysatoren, mit Wasser oder vorzugsweise organischen Lösungsmitteln hergestellt. Der Fachmann weiß, welche Metallkomponente er mit Wasser und welche er mit organischen Lösungsmitteln kombinieren kann.

Als organische Lösungsmittel kommen alle diejenigen in Frage in welchen die Metallkomponente praktisch vollständig oder zumindest zu 80 Gew.-% löslich ist. Gut geeignete Lösungsmittel sind beispielsweise lineare oder cyclische gesättigte, ungesättigte oder vorzugsweise aromatische Kohlenwasserstoffe, $C_1$- bis $C_{20}$-Halogenkohlenwasserstoffe, $C_2$- bis $C_{20}$-Ether, $C_1$- bis $C_{20}$-Alkohole oder $C_2$- bis $C_{20}$-Nitrile.

Gut geeignete aromatische Lösungsmittel sind $C_6$- bis $C_{20}$-Aromaten, wie Benzol, Toluol, Ethylbenzol, o-, m-, p-Xylol, die auch teilweise oder vollständig, beispielsweise mit Halogenatomen oder Alkylresten substituiert sein können.

Weiterhin sind gut geeignet $C_5$- bis $C_{20}$-aliphatische oder alicyclische Kohlenwasserstoffe wie Pentan, n-Hexan, n-Heptan, iso-Dodecan.

Beispiele für geeignete $C_2$- bis $C_{20}$-Ether sind Diethylether, Di-tert-butylether, Diphenylether, 1,4-Dioxan und THF. Beispiele für gut geeignete $C_1$- bis $C_{20}$-Alkohole sind Methanol, Ethanol, n-Butanol, Isopropanol, t-Butanol und Phenol.

Es können auch Mischungen der organischen Lösungsmittel verwendet werden.

Die Tränklösung kann außer dem Lösungsmittel die Metallkomponente als einzige wesentliche Komponente enthalten oder aber die Metallkomponente und gegebenenfalls einen oder mehrere Zusatzstoffe, wie metalloceniumionenbildende Verbindungen B) und/oder Organometallverbindungen C).

Die Tränklösung kann eine oder mehrere unterschiedliche Metallkomponenten A), vorzugsweise Metallocenkomplexe I, enthalten.

Im Falle der Übergangsmetallverbindungen A), vorzugsweise der Organoübergangsmetallverbindungen A), insbesondere im Falle der Metallocenkomplexe I enthält die Tränklösung vorzugsweise noch metalloceniumionenbildende Verbindungen B) und/oder Organometallverbindungen C) als Zusatzstoffe.

Die metalloceniumionenbildenden Verbindungen B) sind in der Regel neutrale Lewissäuren, ionische Verbindungen mit starken lewissauren Kationen oder Brönsted-Säuren als Kation, sowie Alumoxane.

Starke, neutrale Lewissäuren als Komponente B) sind Verbindungen der allgemeinen Formel II

$$M^3X^1X^2X^3 \qquad \text{II}$$

in der

$M^3$ ein Element der III. Hauptgruppe des Periodensystems bedeutet, insbesondere B, Al oder Ga, vorzugsweise B,

$X^1$, $X^2$ und $X^3$ für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Aryl-rest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der $X^1$, $X^2$ und $X^3$ gleich sind, vorzugsweise Tris(pentafluorphenyl)boran.

Ionische Verbindungen als Komponente B) mit starken lewissauren Kationen sind Verbindungen der allgemeinen Formel III

$$[(Y^{a+})Q_1Q_2...Q_z]^{d+} \quad \text{III}$$

in denen

| | |
|---|---|
| Y | ein Element der I. bis VI. Hauptgruppe oder der I. bis VIII. Nebengruppe des Periodensystems bedeutet, |
| $Q_1$ bis $Q_2$ | für einfach negativ geladene Reste wie $C_1$- bis $C_{28}$-Alkyl, $C_6$- bis $C_{15}$-Aryl, Alkylaryl, Arylalkyl, Halogenalkyl, Halogenaryl mit jeweils 6 bis 20 C-Atomen im Aryl- und 1 bis 28 C-Atome im Alkylrest, $C_3$- bis $C_{10}$-Cycloalkyl, welches gegebenenfalls mit $C_1$- bis $C_{10}$-Alkylgruppen substituiert sein kann, Halogen, $C_1$- bis $C_{28}$-Alkoxy, $C_6$- bis $C_{15}$-Aryloxy, Silyl- oder Mercaptylgruppen |
| a | für ganze Zahlen von 1 bis 6 und |
| z | für ganze Zahlen von 0 bis 5 steht, |
| d | der Differenz a-z entspricht, wobei d jedoch größer oder gleich 1 ist. |

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen als Komponente B) mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildende Verbindung beträgt bevorzugt 0,1 bis 10 Äquivalente, bezogen auf die Übergangsmetallkomponente A)

Die Komponente B) kann auch ein Aluminoxan sein oder dieses enthalten.

Besonders geeignet als kationenbildende Verbindung B) sind offenkettige oder cyclische Alumoxanverbindungen der allgemeinen Formel V oder VI

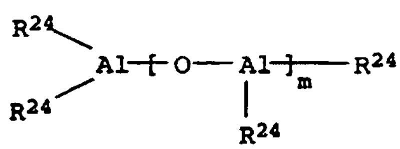

V

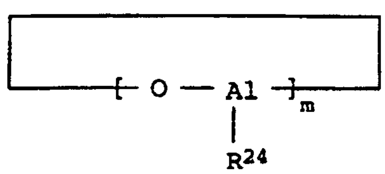

VI

| | |
|---|---|
| wobei $R^{24}$ | eine $C_1$- bis $C_4$-Alkylgruppe bedeutet, bevorzugt eine Methyl- oder Ethylgruppe und m für eine ganze Zahl von 5 bis 30, bevorzugt 10 bis 25 steht. |

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Weiterhin können als Komponente B) Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Übergangsmetallverbindung A) und die oligomere Alumoxanverbindung in solchen Mengen zu verwenden, daß das atomare Verhältnis zwischen Aluminium aus der oligomeren Alumoxanverbindung und dem Übergangsmetall aus der Übergangsmetallverbindung A) im Bereich von 1:1 bis $10^6$:1, vorzugsweise 1:1 bis $10^4$:1, insbesondere im Bereich von 1:1 bis $10^3$:1, liegt.
Das erfindungsgemäße Katalysatorsystem kann als Komponente C) gegebenenfalls noch eine Organometallverbindung, vorzugsweise eine Metallverbindung der allgemeinen Formel IV

$$M^1 (R^{21})_r (R^{22})_s (R^{23})_t \qquad IV$$

in der

M¹ ein Alkali-, ein Erdalkalimetall oder ein Metall der III. Hauptgruppe des Periodensystems, d.h. Bor, Aluminium, Gallium, Indium oder Thallium bedeutet,

$R^{21}$ Wasserstoff, $C_1$- bis $C_{10}$-Alkyl, $C_6$- bis $C_{15}$-Aryl, Alkylaryl oder Arylalkyl mit jeweils 1 bis 10 C-Atom im Alkylrest und 6 bis 20 C-Atomen im Arylrest,

$R^{22}$ und $R^{23}$ Wasserstoff, Halogen, $C_1$- bis $C_{10}$-Alkyl, $C_6$- bis $C_{15}$-Aryl, Alkylaryl, Arylalkyl oder Alkoxy mit jeweils 1 bis 10 C-Atomen im Alkylrest und 6 bis 20 C-Atomen im Arylrest,

r eine ganze Zahl von 1 bis 3

und

s und t ganze Zahlen von 0 bis 2 bedeuten, wobei die Summe r+s+t der Wertigkeit von $M^1$ entspricht,

enthalten. Liegt die Komponente C) zusammen mit A) und/oder B) vor, so ist sie für diesen Fall nicht identisch mit den Komponenten A) und insbesondere B).
Von den Metallverbindungen der allgemeinen Formel IV sind diejenigen bevorzugt, in denen

$M^1$ Lithium, Magnesium oder Aluminium bedeutet und

$R^{21}$ bis $R^{23}$ für $C_1$- bis $C_{10}$-Alkyl stehen.

Besonders bevorzugte Metallverbindungen der Formel IV sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.
Wenn die Komponente C) eingesetzt wird, ist sie bevorzugt in einer Menge von 800:1 bis 1:1, insbesondere 500:1 bis 50:1 (molares Verhältnis von $M^1$ aus IV zu Übergangsmetall M aus I) im Katalysatorsystem enthalten.
Enthält die Tränklösung außer dem Lösungsmittel lediglich die Metallkomponente A) als wesentliche Komponente, wird in der Regel die erfindungsgemäße trägerfixierte Katalysatorkomponente zunächst isoliert und dann, entweder in Gegenwart der umzusetzenden Substrate, wie Monomere, oder in deren Abwesenheit durch Zusatz der Komponenten B) und/oder C) aktiviert.
Als Trägermaterialien des erfindungsgemäßen Katalysatorsystems werden vorzugsweise feinteilige Träger eingesetzt, die einen Teilchendurchmesser im Bereich von 0,1 bis 1000 µm aufweisen, bevorzugt von 10 bis 300 µm, insbesondere von 30 bis 70 µm. Geeignete organische Träger sind beispielsweise feinteilige Polymerisate, z.B. feinteiliges Polyethylen oder feinteiliges Polypropylen. Als anorganische Träger sind z.B. Aluminiumtrioxid, Siliziumdioxid, Titandioxid oder deren Mischoxide, Aluminiumphosphat oder Magnesiumchlorid geeignet. Bevorzugt kommen Kieselgele der Formel $SiO_2 \cdot a\,Al_2O_3$ zum Einsatz, worin a für eine Zahl im Bereich von 0 bis 2, vorzugsweise 0 bis 0,5, steht. Die Trägerpartikel können in granulärer Form sowie sprühgetrocknet in mikroskopischer Form verwendet werden. Derartige Produkte sind im Handel erhältlich, z.B. Silica Gel 332 der Fa. Grace oder ES 70 X der Fa. Crosfield.
Bevorzugte anorganische Trägermaterialien sind saure, anorganische Metall- oder Halbmetall-Oxide mit sehr hoher Porosität, die zum Beispiel in der älteren Deutschen Patentanmeldung 197 20 980.7, insbesondere auf Seite 3, Zeilen 45 bis Seite 5, Zeile 11 beschrieben werden.
Die Trägermaterialien können thermisch oder chemisch (z.B. mit Metallalkylverbindungen) vorbehandelt sein, um ein bestimmtes Eigenschaftsprofil des Trägers (z.B. Wasser- und/oder OH-Gruppengehalt) zu erzielen.

Das Porenvolumen der eingesetzten Trägersubstanzen liegt im allgemeinen im Bereich von 0,1 ml/g bis 10,0 ml/g, vorzugsweise im Bereich von 0,5 ml/g bis 3,0 ml/g. Das Porenvolumen kann nach der Methode der Stickstoffadsorption nach DIN 66131 oder Quecksilber-Porosimetrie nach DIN 66133 bestimmt werden.

Die Trägersubstanzen können durch Ausheizen bei Temperaturen im Bereich von 50 bis 1200°C, vorzugsweise im Bereich von 80 bis 800°C thermisch getrocknet werden. Sie können zusätzlich oder alternativ durch Einwirkenlassen von Organometallverbindungen der Formel IV , insbesondere Aluminiumtri-$C_1$-$C_4$-alkylen, wie Triisobutylaluminium und/oder Aluminoxanen der Formel V und/oder VI chemisch vorbehandelt werden.

Vorzugsweise verwendet man Silicagele mit den definierten Kenngrößen als Trägersubstanzen.

Das erfindungsgemäße Tränkungsverfahren zeichnet sich unter anderem dadurch aus, daß die Tränklösung, deren Zusammensetzung bereits beschrieben wurde, in einer gerichteten Strömung die Trägersubstanz-Partikel, ebenfalls bereits beschrieben, durchströmt. Es ergibt sich zum einen eine Strömung zwischen den einzelnen Trägersubstanz-Partikeln, darüber hinaus aber auch eine Strömung durch die Partikel. Hierdurch wird der Stofftransport aus der Tränklösung auf die innere Oberfläche des Trägermaterials verbessert. Vorzugsweise wird das Tränkungsverfahren so ausgeführt, daß die Trägersubstanz-Partikel, während sie von der Tränklösung durchströmt werden, praktisch in Ruhe sind.

Im Gegensatz hierzu dringt nach derzeitigem Kenntnisstand bei den eingangs genannten Trägerungsverfahren des Standes der Technik die Tränklösung von allen Seiten gleichmäßig in das Partikel ein, wobei es zur Ausbildung von Konzentrationsgradienten kommt.

Das erfindungsgemäße Tränkverfahren kann in verschiedenen Variationen ausgeführt werden. Ein in der Regel säulenförmiges oder zylindrisches oder rohrförmiges Reaktionsgefäß mit Zu-und Ablaufvorrichtung, vergleichbar mit einer "Chromatographiesäule", wird mit der Trägersubstanz bis zu einer bestimmten Höhe gefüllt.

Variante A): Die Tränklösung wird auf die Oberfläche des Trägermaterials gegeben und bei geöffneter Ablaufvorrichtung durch das Trägermaterial hindurchströmen lassen.

Variante B) : Die gesamte Tränklösung wird bei geschlossener Ablaufvorrichtung auf die Oberfläche des Trägermaterials gegeben, läuft aber noch nicht ab. Die Mischung wird kurz aufgerührt und dann wird die Tränklösung durch das Trägermaterial hindurchströmen lassen.

Variante C): Die gesamte Tränklösung wird auf die Oberfläche des Trägermaterials gegeben. Ein Teil der Tränklösung wird bei geöffneter Ablaufvorrichtung durch das Trägermaterial strömen lassen, dann wir die Ablaufvorrichtung geschlossen, die Mischung gerührt und dann die Tränklösung vollständig durch das Trägermaterial abgelassen.

Bei jeder Variante A) bis C) kann der getränkte Katalysator, vorzugsweise nachdem kein Lösungsmittel mehr abläuft, noch 0,1 bis 100 h, vorzugsweise 0,5 bis 24 h stehen gelassen werden, wobei nach derzeitigem Kenntnisstand das Porenvolumen noch mit der Tränklösung gefüllt ist.

Die Tränklösung fließt in der Regel durch Eigendruck durch die Trägersubstanz hindurch. Es ist jedoch auch möglich einen Druck im Bereich von 1 bis 1000 mbar auf die Flüssigkeitssäule der Tränklösung einwirken zu lassen. Die Fließrate der Tränklösung liegt im allgemeinen im Bereich von 0,1 bis 100,0 ml/(g Trägersubstanz x h), vorzugsweise im Bereich von 1,0 bis 50,0 ml/(g Trägersubstanz x h).

In der Regel wird der Katalysator oder die Katalysatorvorstufe durch Nachspülen mit einem oder mehreren niedrigsiedenden Lösungsmitteln gewaschen. Bevorzugt sind dabei Lösungsmittel oder Lösungsmittelgemische, in denen das oder die Metallocene und/oder die Zusatzstoffe B) und/oder C) schlechter löslich sind als in der Tränklösung. Anschließend wird der Katalysator oder die Katalysatorvorstufe als Suspension ausgetragen oder mit üblichen Verfahren, wie Anlegen eines Unterdrucks oder Durchströmen eines Inertgases, wie Stickstoff, getrocknet. Er fällt dann in rieselfähiger Form an.

Das Volumen der Tränklösung beträgt mindestens das 1,5fache des Porenvolumens des eingesetzten, chemisch unbehandelten Trägers. Vorzugsweise beträgt das Volumen der Tränklösung das dreifache bis 10 fache des Porenvolumens des chemisch unbehandelten Trägers. Das Porenvolumen kann mit der Methode der Stickstoff-Adsorption (DIN 66131) oder Quecksilber Porosimetrie (DIN 66133) bestimmt werden.

Als Trägersubstanz kann auch ein Ziegler-Katalysatorfeststoff, üblicherweise auf Basis Titan oder ein Phillips-Katalysator, üblicherweise auf Basis Cr, verwendet werden. Derartige Katalysatoren sind beispielsweise in Angew. Chemie 92, 869 - 87 (1980); EP-A 45975; EP-A 45977; EP-A 86473; EP-A 171200; EP-A 429937; DE-A 4132894; GB-A 2111066; US 4,220,554; US 4,339,054; US 4,472,524; US 4,473,660; US-A 4,857,613 beschrieben. Wenn ein Ziegler- oder Phillips-Katalysatorfeststoff als Trägermaterial verwendet wird, erhält man nach dem erfindungsgemäßen Verfahren einen Mehrzentrenkatalysator, in welchem chemisch unterschiedliche Metalle oder Metallkomplexfragmente vorhanden sind.

Im erfindungsgemäßen Tränkverfahren wird üblicherweise die gesamte Tränklösung, gegebenenfalls unter Benutzung der erwähnten Varianten A, B oder C, durch die Trägersubstanz strömen gelassen und der Katalysator isoliert. Das eluierte Lösungsmittel oder die an Komponenten A) bis C) verarmte Tränklösung kann weiterverwendet werden. In der an den Komponenten A) bis C) verarmten Tränklösung kann die ursprüngliche Konzentration der Komponenten A) bis C) wieder hergestellt werden, beispielsweise durch Zusatz der Komponenten oder durch Eindampfen der Lösung (Rezyklierung). Diese Tränklösung kann dann wieder zur Tränkung verwendet werden.

Dieses Verfahren kann kontinuierlich, vorzugsweise jedoch diskontinuierlich betrieben werden.

Die nach dem erfindungsgemäßen Verfahren erhältlichen Trägerkatalysatoren oder Trägerkatalysatorkomponenten zeichnen sich durch eine unterschiedliche Beladungshöhe der einzelnen Trägersubstanz-Partikel aus, wobei jedoch praktisch keine unbeladenen Trägerpartikel nachweisbar sind. Unter der Beladungshöhe wird hierbei die Konzentration der erfindungsgemäß eingesetzten Metallkomponente in den einzelnen Trägerpartikeln verstanden. Das bedeutet, die erhältlichen Trägerkatalysatoren oder Trägerkatalysatorkomponenten setzen sich üblicherweise aus Fraktionen von Trägerkatalysatorpartikeln oder Trägerkatalysatorkomponentenpartikeln zusammen, welche einen signifikant unterschiedlichen Metallkomponentengehalt haben.

Diesen Sachverhalt nennt man im folgenden Beladungshöhenverteilung.

Sowohl die integrale Beladungshöhe, d. h. die Summe der auf dem eingesetzten Trägermaterial aufgebrachten Metallkomponente, als auch die Beladungshöhenverteilung kann in weiten Grenzen durch die Ausgangskonzentrationen an Metallkomponente und gegebenenfalls eingesetzten Zusatzstoffen in der Tränklösung, das eingesetzte Volumen der Tränklösung sowie die Wahl des Lösungsmittels eingestellt werden.

Zur Analyse der Beladungshöhenverteilung, vergleiche hierzu Beispiele 10 und 11, werden zunächst an verschiedenen Stellen der Fließstrecke der Tränklösung die Beladungshöhe der Katalysatorpartikel gemessen. Für eine empirisch gewählte Funktion vom Typ $f(x) = a \exp(-bx) + c$ (mit x: Fließstrecke; f(x): Beladungshöhe in μ mol Metallocen (oder Metallkomponente) / g Katalysator) werden die Koeffizienten a, b und c bestimmt, mit denen die Funktion bestmöglich an die Meßpunkte angepaßt ist. Aus diesem mathematischen Zusammenhang von Beladungshöhe und Fließstrecke für den Trägerkatalysator erhält man durch Umformen und Normierung eine Verteilungsfunktion P(x) für die Beladungshöhe (x: Beladungshöhe) vom Typ $P(x) = \alpha \ln (x-c)$ [α: Normierungskoeffizient] und durch Ableitung die entsprechende (Wahrscheinlichkeits-) Dichtefunktion $p(x) = \alpha/(x-c)$. Mit Hilfe dieser Dichtefunktion kann man dann das 1. Moment (arithmetisches Mittel) $\mu_1$ der Beladungshöhenverteilung,

$$\mu_1 = \langle x \rangle = {}_a\int^b x p(x)\, dx$$

[a: Minimale Beladung, d.h. Messwert für 50 mm Fließstrecke
b: Maximale Beladung, d.h. Messwert für 0 mm Fließstrecke]

ihre Varianz Var(x),

$$\mathrm{Var}(x) = \langle x^2 \rangle - \mu_1^2 \qquad \text{mit } \langle x^2 \rangle = {}_a\int^b x^2\, p(x)\, dx$$

[a,b: s. oben]

die Standardabweichung σ

$$\sigma = (\mathrm{Var}(x))^{0,5}$$

und die Schiefe s

$$s = \langle ((x-\mu_1)/\sigma)^3 \rangle = \sigma^{-3}\ {}_a\int^b (x-\mu_1)^3\, p(x)\, dx \qquad \text{[a,b: s. oben]}$$

bestimmen. Hierfür werden die Integrale numerisch nach der Sehnen-Trapez-Formel berechnet (Schrittweite: 1/10000 des Gesamtintervalls).

Bevorzugte metallhaltige Trägerkatalysatoren für Polymerisationsverfahren oder metallhaltige Trägerkatalysatorkomponente für Polymerisationsverfahren weisen eine asymmetrische Beladungshöhenverteilung auf. Deren Beladungshöhenverteilung hat eine Standardabweichung von mindestens 1 % des 1. Momentes der Verteilung, sowie eine Schiefe s, die die Bedingung $s^2 \geq 0,0001$ erfüllt. Besonders bevorzugte metallhaltige Trägerkatalysatoren erfüllen

die Bedingung s ≥ +0,01.

Die nach dem erfindungsgemäßen Verfahren erhältlichen Trägerkatalysatoren können auch vorpolymerisiert werden.

Es war überraschend, daß ein solcher "heterogener" (bezogen auf die Metallkomponentenkonzentration der Fraktionen) Trägerkatalysator oder Trägerkatalysatorkomponente eine gute Verfahrenstauglichkeit bei Polymerisationsverfahren zeigte.

Das erfindungsgemäße Katalysatorsystem wird zur Polymerisation von Monomeren mit C-C-Doppelbindung oder C-C-Dreifachbindung eingesetzt. Dabei kann die C-C-Doppelbindung oder die C-C-Dreifachbindung oder beide sowohl terminal als auch innenständig, sowohl exocyclisch als auch endocyclisch angeordnet sein. Bevorzugte Monomere mit C-C-Dreifachbindung sind $C_2$- bis $C_{10}$-Alk-1-ine, wie Ethin, Propin, 1-Butin, 1-Hexin und weiterhin Phenylacetylen. Bevorzugt wird das erfindungsgemäße Polymerisationsverfahren zur Polymerisation oder Copolymerisation von $C_2$- bis $C_{12}$-Alk-1-enen eingesetzt. Als $C_2$- bis $C_{12}$-Alk-1-ene sind Ethylen, Propylen, But-1-en, Pent-1-en, 4-Methyl-pent-1-en, Hex-1-en, Hept-1-en oder Oct-1-en sowie vinylaromatische Monomere wie Styrol, p-Methylstyrol oder 2,4-Dimethylstyrol oder Gemische aus diesen $C_2$- bis $C_{12}$-Alk-1-enen bevorzugt. Besonders bevorzugt sind Homo- oder Copolymerisate des Ethylens oder des Propylens, wobei der Anteil an Ethylen oder an Propylen in den Copolymerisaten mindestens 50 Mol-% beträgt. Bei den Copolymerisaten des Ethylens sind diejenigen bevorzugt, die als weitere Monomere Propylen, But-1-en, Hex-1-en oder Oct-1-en oder deren Mischungen enthalten. Bei den Copolymerisaten des Propylens handelt es sich insbesondere um solche Copolymerisate, die als weitere Monomere Ethylen oder But-1-en oder deren Mischungen enthalten.

Vorzugsweise werden mit dem erfindungsgemäßen Polymerisationsverfahren solche Polymerisate hergestellt, die

50 bis 100 Mol-% Ethylen und
0 bis 50 Mol-%, insbesondere 0 bis 30 Mol-% $C_3$- bis $C_{12}$-Alk-1-ene

enthalten.

Bevorzugt sind auch solche Polymerisate, die

50 bis 100 Mol-% Propylen,
0 bis 50 Mol-%, insbesondere 0 bis 30 Mol-% Ethylen und
0 bis 20 Mol-%, insbesondere 0 bis 10 Mol-% $C_4$- bis $C_{12}$-Alk-1-ene

aufweisen.

Die Summe der Mol-% ergibt stets 100.

Die Polymerisation kann in den für die Polymerisation von Olefinen üblichen Verfahren, wie Lösungsverfahren, Suspensionsverfahren, gerührtes Gasphasenverfahren oder Gasphasenwirbelschichtverfahren, kontinuierlich oder auch diskontinuierlich durchgeführt werden. Als Lösungsmittel oder Suspensionsmittel können inerte Kohlenwasserstoffe, wie beispielsweise iso-Butan, oder aber die Monomeren selbst verwendet werden. Besonders gut geeignete Verfahren zur Herstellung der Polymerisate sind das Suspensionsverfahren und die Gasphasenverfahren (gerührte Gasphase, Gasphasenwirbelschicht).

Geeignete Reaktoren sind u.a. kontinuierlich betriebene Rührkessel, Schleifenreaktoren oder Wirbelbettreaktoren, wobei man gegebenenfalls auch eine Reihe von mehreren hintereinander geschalteten Reaktoren verwenden kann (Reaktorkaskade).

Die Polymerisation mit Hilfe des erfindungsgemäßen Verfahrens wird im allgemeinen bei Temperaturen im Bereich von -50 bis 300°C, vorzugsweise im Bereich von 0 bis 150°C, und bei Drücken in der Regel im Bereich von 0,5 bis 3000 bar, vorzugsweise im Bereich von 1 bis 80 bar, durchgeführt. Bei den erfindungsgemäßen Polymerisationsverfahren ist es vorteilhaft, die Verweilzeiten der jeweiligen Reaktionsgemische auf 0,5 bis 5 Stunden, insbesondere auf 0,7 bis 3,5 Stunden, einzustellen. Es können bei der Polymerisation u.a. auch Antistatika sowie Molmassenregler, beispielsweise Wasserstoff, mitverwendet werden.

Die mit dem erfindungsgemäßen Polymerisationsverfahren erhältlichen Polymerisate können zur Herstellung von Folien, Fasern und Formkörpern verwendet werden.

Beispiele

Alle präparativen Arbeiten wurden nach Standard-Schlenktechniken in inertisierten Glasgefäßen unter $N_2$- oder Ar-Schutzgasatmosphäre durchgeführt.

Beispiel 1: Chemische Trocknung von granulärem $SiO_2$

1000 g Kieselgel (SG 332, Mittlerer Durchmesser: 50 µm, Porenvolumen: 1.75 ml/g, Fa. Grace; 8 h bei 180°C im Vakuum (1 mbar) ausgeheizt) wurde in 5 l Toluol unter $N_2$-Atmosphäre suspendiert. Bei einer Temperatur von 18°C wurden 7.75 l (6.83 kg) 1.53 molare Methylaluminoxanlösung (in Toluol, Fa. Witco) über 120 Minuten zugegeben. Anschließend wurde 7 h bei RT nachgerührt, filtriert und der Filterkuchen 2x mit je 2.5 l Toluol gewaschen. Danach wurde die Trägervorstufe im Vakuum getrocknet. Es wurden 1.35 kg chemisch getrocknete Vorstufe erhalten.

Beispiel 2

2.1: Herstellung eines erfindungsgemäßen Metallocen-Trägerkatalysators (Lösungsvolumen = 1.85-faches des Porenvolumens)

In einer inertisierten Schlenkf ritte (Durchmesser: ca. 2 cm) wurden 5 g der in Beispiel 1 hergestellten Vorstufe (Porenvolumen: 1.3 ml/g) vorgelegt (ca. 5 cm Schichtdicke). In einem separaten Kolben wurden 72 mg (125 µmol) rac. -Dimethylsilylenbis(2-methylbenz[e]in-denyl)zirkondichlorid in 12 ml 1.53 molarer (bez. auf Al) MAO-Lösung (Fa. Witco: 10 w-% Methylaluminoxan in Toluol) gelöst. Nach 30 minütigem Nachrühren wurde die in der Schlenkfritte vorgelegte Vorstufe vorsichtig überschichtet. Nach 1h war die überstehende Lösung abgelaufen und der zurückbleibende Trägerkatalysator wurde kurz mit $N_2$ abgepreßt. Die hierbei ablaufende Tränklösung war nur noch schwach gefärbt und wurde verworfen. Der zurückbleibende Trägerkatalysator war im oberen Abschnitt tief-orange gefärbt, im unteren dagegen nur schwach. Er wurde 4x mit je 5ml Pentan ohne aufrühren gewaschen. Anschließend wurde im $N_2$-Strom (von oben) getrocknet. Für die Polymerisation wurden ca. 2 g aus dem oberen Bereich der Säule isoliert.

2.2: Polymerisation (1 l-Autoklav)

In einem trockenen, $N_2$-gespülten 1 l-Autoklaven wurden 2.5 mmol Triisobutylaluminium (TiBA; 1.25 ml einer 2-molaren Lösung in Heptan) vorgelegt. Nach Zugabe von 6 mg Stadis® 450 (10 w-% bez. auf die Katalysatormasse; Stadis® 450 ist ein Produkt der Fa. DuPont) wurden 500 ml flüssiges Propen zudosiert. Anschließend wurden 60 mg des in Beispiel 2.1 hergestellten Metallocen-Trägerkatalysators über eine Schleuse mit $N_2$ eingeschossen, der Autoklav auf 60°C aufgeheizt und die Polymerisation bei dieser Temperatur durchgeführt. Nach 90' wurde die Polymerisation durch Ablassen des restlichen Propens abgebrochen und das Produkt durch ein Bodenventil abgelassen. Es wurden 166 g Polypropylengries ohne Grobanteile erhalten (Produktivität: 2765 g PP/g Katalysator). Die anschließende Inspektion des Autoklaven zeigte keine Beläge oder Brocken.

Beispiel 3: Chemische Trocknung von sprühgetrocknetem $SiO_2$ Nr. I

1000 g sprühgetrocknetes Kieselgel (Mittlerer Teilchendurchmesser: 19.8 µm; BET-Oberfläche nach DIN 66131: 333.5 $m^2$; Porenvolumen: 1.66 ml/g; 8 h bei 180°C im Vakuum (1 mbar) ausgeheizt) wurde in 5 1 Toluol unter $N_2$-Atmosphäre suspendiert. Bei einer Temperatur von 18°C wurden 7.75 l (6.83 kg) 1.53 molare Methylaluminoxanlösung (in Toluol, Fa. Witco) über 120 Minuten zugegeben. Anschließend wurde 7 h bei RT nachgerührt, filtriert und der Filterkuchen 2x mit je 2.5 l Toluol gewaschen. Danach wurde die Trägervorstufe im Vakuum getrocknet. Es wurden 1.38 kg chemisch getrocknete Vorstufe erhalten.

Beispiel VI (Vergleichsbeispiel)

V 1.1: Herstellung eines Metallocen-Trägerkatalysators (Lösungsvolumen = Porenvolumen)

In einer inertisierten Schlenkfritte (Durchmesser: ca. 2 cm) wurden 5 g der in Beispiel 3 hergestellten Vorstufe (Porenvolumen: 1.2 ml/g) vorgelegt (ca. 5 cm Schichtdicke). In einem separaten Kolben wurden 72 mg (125 µmol) rac. -Dimethylsilylenbis(2-methylbenz[e]in-denyl)zirkondichlorid in 6 ml 1.53 molarer (bez. auf Al) MAO-Lösung (Fa. Witco: 10 w-% Methylaluminoxan in Toluol) gelöst. Nach 30 minütigem Nachrühren wurde die in der Schlenkfritte vorgelegte Vorstufe vorsichtig überschichtet. Nach ca. 1 h war die überstehende Lösung abgelaufen und der zurückbleibende Trägerkatalysator wurde 20 h lichtgeschützt stehengelassen. Danach wurde kurz mit $N_2$ abgepreßt. Die hierbei ablaufende Tränklösung war farblos und wurde verworfen. Die Vorstufe war nur im oberen Abschnitt beladen (erkennbar an der orangen Färbung). Der untere Teil der Säule war völlig weiß. Er wurde 6x mit je 5 ml Pentan ohne aufrühren gewaschen. Anschließend wurde im $N_2$-Strom (von oben) getrocknet. Der Katalysator enthielt einen hohen Anteil unbeladener (weißer) Trägerpartikel.

Beispiel 4

4.1. Herstellung eines erfindungsgemäßen Metallocen-Trägerkatalysators (Lösungsvolumen = 4-faches des Porenvolumens)

In einer inertisierten Schlenkfritte (Durchmesser: ca. 2 cm) wurden 2.5 g der in Beispiel 3 hergestellten Vorstufe (Porenvolumen: 1.2 ml/g) vorgelegt (ca. 2.5 cm Schichtdicke). In einem separaten Kolben wurden 144 mg (250 µmol) rac.-Dimethylsilylenbis(2-methylbenz[e]in-denyl)zirkondichlorid in 12 ml 1.53 molarer (bez. auf Al) MAO-Lösung (Fa. Witco: 10 w-% Methylaluminoxan in Toluol) gelöst. Nach 30 minütigem Nachrühren wurde die Lösung in die Schlenkfritte gegeben und die vorgelegte Vorstufe kurz aufgerührt (ca. 30 s). Nach ca. 1 h war die überstehende Lösung abgelaufen und der zurückbleibende Trägerkatalysator wurde 20 h lichtgeschützt stehengelassen. Danach wurde kurz mit $N_2$ abgepreßt. Die hierbei ablaufende Tränklösung war schwach-orange gefärbt und wurde verworfen. Die Vorstufe war vollständig beladen (einheitliche tief-orange Färbung des Trägerkatalysators). Er wurde 6 x mit je 5 ml Pentan unter Aufrühren gewaschen. Anschließend wurde im $N_2$-Strom (von oben) getrocknet. Die Ausbeute betrug ca. 2.75 g Trägerkatalysator (Zr-Gehalt: 42.8 µmol/g ⇒ Metallocen-Ausnutzung: >94 %).

4.2: Polymerisation (1 l-Autoklav)

Beispiel 2.2 wurde mit 48 mg Trägerkatalysator aus Beispiel 4.1 wiederholt, wobei 160 g Polypropylengries erhalten wurden (Produktivität: 3330 g PP/g Katalysator). Die anschließende Inspektion des Autoklaven zeigte keine Beläge oder Brocken.

Beispiel 5: Chemische Trocknung von sprühgetrocknetem $SiO_2$ Nr. II

1000 g sprühgetrocknetes Kieselgel (Mittlerer Teilchendurchmesser: 26 µm; BET-Oberfläche nach DIN 66131: 310 $m^2$; Porenvolumen: 1.38 ml/g; 8 h bei 180°C im Vakuum (1 mbar) ausgeheizt) wurde in 5 l Toluol unter $N_2$-Atmosphäre suspendiert. Bei einer Temperatur von 18°C wurden 7.75 l (6.83 kg) 1.53 molare Methylaluminoxanlösung (in Toluol, Fa. Witco) über 120 Minuten zugegeben. Anschließend wurde 7 h bei RT nachgerührt, filtriert und der Filterkuchen 2 x mit je 2.5 l Toluol gewaschen. Danach wurde die Trägervorstufe im Vakuum getrocknet. Es wurden 1.37 kg chemisch getrocknete Vorstufe erhalten.

Beispiel 6

6.1: Herstellung eines erfindungsgemäßen Metallocen-Trägerkatalysators

In einer inertisierten Schlenkfritte (Durchmesser: ca. 10 cm) wurden 100 g der in Beispiel 5 hergestellten Vorstufe (Porenvolumen: 1.0 ml/g) vorgelegt (ca. 5 cm Schichtdicke). In einem separaten Kolben wurden 2880 mg (5 mmol) rac.-Dimethylsilylenbis(2-methylbenz[e]in-denyl)zirkondichlorid in 240 ml 1.53 molarer (bez. auf Al) MAO-Lösung (Fa. Witco: 10 w-% Methylaluminoxan in Toluol) gelöst. Nach 30 minütigem Nachrühren wurde die Lösung in die Schlenkfritte gegeben und die vorgelegte Vorstufe vorsichtig überschichtet. Das durchlaufende, zunächst farblose, später zunehmend orange gefärbte Filtrat (ca. 120 ml) wurde insgesamt viermal zurückgeführt, bis die Vorstufe einheitlich orange gefärbt war. Anschließend wurde der feuchte Trägerkatalysator 48 h lichtgeschützt stehengelassen und dann kurz mit $N_2$ abgepreßt. Die hierbei ablaufende Tränklösung war orange gefärbt und für den Folgeversuch aufbewahrt. Die Vorstufe war vollständig beladen (einheitliche tief-orange Färbung des Trägerkatalysators) . Er wurde 4 x mit je 200 ml Pentan unter Aufrühren gewaschen. Anschließend wurde im $N_2$-Strom (von oben) getrocknet. Die Ausbeute betrug 113.9 g Trägerkatalysator (Zr-Gehalt: 38.4 µmol/g ⇒ Metallocen-Ausnutzung: 87.5 %).

6.2: Polymerisation (1 l-Autoklav)

Beispiel 2.2 wurde mit 53 mg Trägerkatalysator aus Beispiel 6.1 wiederholt, wobei 268 g Polypropylengries erhalten wurden (Produktivität: 5055 g PP/g Katalysator). Die anschließende Inspektion des Autoklaven zeigte keine Beläge oder Brocken.

6.3. Polymerisation im kontinuierlichen Gasphasenverfahren

Der in Beispiel 6.1 hergestellte Metallocen-Trägerkatalysator wurde für die kontinuierliche Propen-Homopolymerisation in einem vertikal durchmischten 200 l Gasphasenreaktor eingesetzt. Der Reaktor enthält ein Bett aus feinteiligem Polymerisat und wurde bei einem konstanten Ausstoß von 20 kg/h betrieben. Der Reaktordruck betrug

24bar und die Reaktortemperatur 60°C. Als Putzalkyl wurden 30 mmol Triisobutylaluminium pro Stunde zugefahren (1-molare Lösung in Heptan). Es wurde ein Polymergries mit einer Schüttdichte von 475 g/l, einer mittleren Partikelgröße von $d_{avg.}$ = 1.16 mm und 2 w-% Partikel mit einem Durchmesser d > 2 mm erhalten (Polymerdaten: $T_m$: 147.8°C, [η]: 2.21 dl/g, MFI: 4.2 g/10', $X_L$: 0.4 w-%). Die Katalysatorproduktivität betrug 6.2 kg PP/g Katalysator.

Beispiel 7

7.1: Herstellung eines erfindungsgemäßen Metallocen-Trägerkatalysators mit recyklierter Tränklösung

In einer inertisierten Schlenkfritte (Durchmesser: ca. 6 cm) wurden 20 g der in Beispiel 5 hergestellten Vorstufe (Porenvolumen: 1.0 ml/g) vorgelegt (ca. 2.5 cm Schichtdicke) und vorsichtig mit der bereits in Beispiel 6.1 eingesetzten Tränklösung überschichtet. Das durchlaufende, zunächst farblose, später schwach orange gefärbte Filtrat (ca. 80 ml) wurde insgesamt viermal zurückgeführt, bis die Vorstufe einheitlich orange gefärbt war. Anschließend wurde der feuchte Trägerkatalysator 96 h lichtgeschützt stehengelassen und dann kurz mit $N_2$ abgepreßt. Die hierbei ablaufende Tränklösung war schwach-orange gefärbt und wurde verworfen. Die Vorstufe war vollständig beladen (einheitliche orange Färbung des Trägerkatalysators). Er wurde 3 x mit je 50 ml Pentan unter Aufrühren gewaschen. Anschließend wurde im $N_2$-Strom (von Oben) getrocknet. Die Ausbeute betrug 20.7 g Trägerkatalysator (Zr-Gehalt: 14.3 μmol/g ⇒ Metallocen-Ausnutzung: 5.9 % der in Beispiel 6.1 eingesetzten Menge. Gesamtausnutzung in Beispiel 6.1 und 7.1: 93.4 %).

7.2: Polymerisation (1 l-Autoklav)

Beispiel 2.2 wurde mit 59 mg Trägerkatalysator aus Beispiel 7.1 wiederholt, wobei 133 g Polypropylengries erhalten wurden (Produktivität: 2250 g PP/g Katalysator). Die anschließende Inspektion des Autoklaven zeigte keine Beläge oder Brocken.

Beispiel V 2 (Vergleichsbeispiel)

V 2.1: Herstellung eines Metallocen-Trägerkatalysators analog Wo 94/28034 (niedrige Metallocenbeladung)

In einem trockenen, $N_2$-gespülten Glaskolben wurden 57.8 mg (0.1 mmol) rac.-Dimethyl-silylenbis(2-methylbenz[e]indenyl)zirkondichlorid zu 13.2 ml Methylaluminoxan-Lösung (1.53 molar bez. auf Al; 10 w-%ige Methylaluminoxan-Lösung in Toluol d. Fa. Witco) gegeben. Nach 30-minütigem Rühren wurden zunächst 10 ml Toluol und dann 10 g des in Beispiel 1 chemisch getrockneten Kieselgels zugegeben. Es wurde nochmals 30 Minuten nachgerührt und dann das Lösungsmittel langsam über 2 h abgezogen. Zurück blieben 11.3 g eines orange-farbenen, gut rieselfähigen Metallocen-Trägerkatalysators (Metallocenausnutzung: 100 %).

V 2.2: Polymerisation (1 l-Autoklav)

Beispiel 2.2 wurde mit 128mg Trägerkatalysator aus Beispiel V 2.1 wiederholt, wobei 215 g Polypropylengries erhalten wurden (Produktivität: 1680 g PP/g Katalysator).

Beispiel V 3 (Vergleichsbeispiel)

V 3.1: Herstellung eines Metallocen-Trägerkatalysators analog WO 94/28034 (hohe Metallocenbeladung)

In einem trockenen, $N_2$-gespülten Glaskolben wurden 145 mg (0.25 mmol) rac.-Dimethyl-silylenbis(2-methylbenz[e]indenyl)zirkondichlorid zu 15 ml Methylaluminoxan-Lösung (1.53 molar bez. auf Al; 10 w-%ige Methylaluminoxan-Lösung in Toluol d. Fa. Witco) gegeben. Nach 30-minütigem Rühren wurden zunächst 10 ml Toluol und dann 10 g des in Beispiel 1 chemisch getrockneten Kieselgels zugegeben. Es wurde nochmals 30' nachgerührt und dann das Lösungsmittel langsam über 2 h abgezogen. Es wurden 11.6 g eines orange-farbenen, gut rieselfähigen Metallocen-Trägerkatalysators erhalten (Metallocenausnutzung: 100 %).

V 3.2: Polymerisation (1 l-Autoklav)

Beispiel 2.2 wurde mit 180mg Trägerkatalysator aus Beispiel V 3.1 wiederholt. Die Polymerisation mußte nach 37' abgebrochen werden, da der Rührer blockiert wurde. Nach dem Ablassen des restlichen Propens ließen sich 74 g Polypropylen mit teilweise grober Morphologie austragen. Nach dem Öffnen des Autoklaven fanden sich weitere 50 g Brocken, die teilweise am Rührer hafteten. Die Autoklavenwand war von einem leichten Belag überzogen (Produktivität: 690 g PP/g Katalysator).

Beispiel V 4 (Vergleichsbeispiel)

V 4.1: Herstellung eines Metallocen-Trägerkatalysators analog WO 94/14856 (Lösungsvolumen ≤ Porenvolumen)

In einem trockenen, $N_2$-gespülten Glaskolben wurde 73 mg (0.13 mmol) rac.-Dimethyl-silylenbis(2-methylbenz[e]indenyl)zirkondichlorid vorgelegt. Anschließend wurde solange toluolische Methylaluminoxan-Lösung (1.53 molar bez. auf Al; 10 w-%ige Methylaluminoxan-Lösung, Fa. Witco) zugegeben, bis das Metallocen gerade vollständig gelöst war. Hierfür wurden 6 ml benötigt. Nach 30-minütigem Rühren wurde die erhaltene Lösung dann gleichmäßig auf 5 g des in Beispiel 1 chemisch getrockneten Kieselgels (Porenvolumen: 1.3 ml/g) aufgebracht. Es wurde nochmals 30 Minuten nachgerührt und dann das Lösungsmittel langsam über 2 h abgezogen. Es wurden 5.7 g eines orangefarbenen, gut rieselfähigen Metallocen-Trägerkatalysators erhalten (Metallocenausnutzung: 100 %; 22.2 µmol Zr/g).

V 4.2: Polymerisation (1 l-Autoklav)

Beispiel 2.2 wurde mit 167 mg Trägerkatalysator aus Beispiel V 4.1 wiederholt, wobei 167 g Polypropylengries erhalten wurden (Produktivität: 1000 g PP/g Katalysator).

Beispiel 8: Chemische Trocknung von sprühgetrocknetem $SiO_2$ Nr. III

20 g sprühgetrocknetes Kieselgel (Mittlerer Teilchendurchmesser: 45 µm; Spez. Oberfläche: 307 $m^2$; Porenvolumen: 1.53 ml/g; 8 h bei 180°C im Vakuum (1 mbar) ausgeheizt) wurden in 150 ml Toluol unter $N_2$-Atmosphäre suspendiert. Bei Raumtemperatur wurden 155 ml (137 g) 1.53 molare (bez. auf Al) Methylaluminoxanlösung (in Toluol, Fa. Witco) langsam zugegeben. Anschließend wurde 12 h bei RT nachgerührt, filtriert und der Filterkuchen zunächst 2 x mit je 50 ml Toluol und anschließend 2 x mit je 50 ml Pentan gewaschen. Danach wurde die Trägervorstufe im Vakuum getrocknet. Es wurden 26.4 g chemisch getrocknete $SiO_2$-Vorstufe erhalten.

Beispiel 9

9.1: Herstellung eines erfindungsgemäßen Metallocen-Trägerkatalysators

In einer inertisierten Schlenkfritte (Durchmesser: ca. 2 cm) wurden 5 g der in Beispiel 8 hergestellten Vorstufe (Porenvolumen: 1.16 ml/g) vorgelegt (ca. 5 cm Schichtdicke). In einem separaten Kolben wurden 240 mg (0.42 mmol) rac.-Dimethylsilylenbis(2-methylbenz[e]in-denyl)zirkondichlorid in 20 ml 1.53 molarer (bez. auf Al) MAO-Lösung (Fa. Witco: 10 w-% Methylaluminoxan in Toluol) gelöst. Nach 30 minütigem Nachrühren wurde die Lösung in die Schlenkfritte gegeben und die vorgelegte Vorstufe vorsichtig überschichtet. Innerhalb von einer Stunde war die überstehende Tränklösung abgelaufen (zunächst farblos, später zunehmend orange gefärbt). Anschließend wurde der feuchte Trägerkatalysator 20 h lichtgeschützt stehengelassen und dann kurz mit $N_2$ abgepreßt. Die hierbei ablaufende restliche Tränklösung war orange gefärbt und wurde verworfen. Die Vorstufe war vollständig beladen (einheitliche tief-orange Färbung des Trägerkatalysators). Er wurde 4 x mit je 10 ml Pentan unter Aufrühren gewaschen. Anschließend wurde im $N_2$-Strom (von Oben) getrocknet. Die Ausbeute betrug 5.6 g Trägerkatalysator (Zr-Gehalt: 62.5 µmol/g ⇒ Metallocen-Ausnutzung: 84.1 %).

9.2: Polymerisation (10 l-Autoklav)

In einem trockenen mit Stickstoff gespülten 10 1-Autoklaven wurden nacheinander 100 g Polypropylengries und 9 ml einer 2-molaren Triisobutylaluminium-Lösung in Heptan und 1 ml einer 2-molaren Diisobutylaluminiumhydrid-Lösung in Heptan gegeben. Anschließend wurden 210 mg des in 9.1 hergestellten Metallocen-Trägerkatalysators im Stickstoffgegenstrom unter Rühren in den Autoklav gefüllt, dieser verschlossen und bei 25°C und einer Rührerdrehzahl von 350 U/min mit 7.0 l flüssigem Propen befüllt. Anschließend wurde die Temperatur schrittweise auf 65°C erhöht, wobei der Innendruck auf 26-28 bar anstieg. Dann wurde 90' bei 65°C und 250 - 300 U/min polymerisiert.

Nach beendeter Polymerisation wurde über 15' auf Atmosphärendruck entspannt und das entstandene Polymerisat im Stickstoffstrom ausgetragen. Es wurden 2589 g Polypropylengries erhalten (Produktivität: 12330 g PP/g Kat.). Die anschließende Inspektion des Autoklaven zeigte keine Beläge oder Brocken.

Beispiel V 6 (Vergleichsbeispiel)

V 6.1: Herstellung eines Metallocen-Trägerkatalysators (Fällungsmethode analog WO 98/01481)

6.6 g des in Beispiel 8 chemisch getrockneten $SiO_2$-Trägers wurden zu einer Lösung von 300 mg ) rac.-Dimethylsilylenbis(2-methylbenz[e]indenyl)zirkondichlorid in 68 ml 1.53 molarer (bez. auf Al) MAO-Lösung (Fa. Witco: 10 w-% Methylaluminoxan in Toluol) gegeben und bei RT gerührt. Nach 24 h wurden langsam 165 ml iso-Dodekan zugetropft. Anschließend wurde weitere 2 h gerührt, der orangefarbene Feststoff abfiltriert, zweimal mit je 50 ml Pentan gewaschen und im Stickstoffstrom getrocknet. Die Ausbeute betrug 8.3 g Metallocen-Trägerkatalysator (Zr-Gehalt: 43.9 µmol/g ⇒ Metallocen-Ausnutzung: 70 %).

V 6.2: Polymerisation (10 l-Autoklav)

Die Polymerisation wurde analog zu Beispiel 9.2 mit 238 mg des in V 6.1. hergestellten Trägerkatalysators durchgeführt. Es wurden 2870 g Polypropylengries erhalten (Produktivität: 12050 g PP/g Kat.). Die anschließende Inspektion des Autoklaven zeigte keine Beläge oder Brocken.

Vergleich von V6 mit Beispiel 9 zeigt, daß das erfindungsgemäße verfahren zu einer besseren Ausnutzung des Metallocens führt.

Beispiel 10

10.1: Herstellung eines erfindungsgemäßen Metallocen-Trägerkatalysator

In einer inertisierten Schlenkfritte (Durchmesser: ca. 2 cm) wurden 5 g der in Beispiel 5 hergestellten Vorstufe (Porenvolumen: 1.0 ml/g) vorgelegt (ca. 5 cm Schichtdicke). In einem separaten Kolben wurden 144 mg (250 µmol) rac.-Dimethylsilylenbis(2-methylbenz[e]in-denyl)zirkondichlorid in 12 ml 1.53 molarer (bez. auf Al) MAO-Lösung (Fa. Witco: 10 w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach dem die überstehende Tränklösung abgelaufen war, wurden die farblos abgelaufenen, ersten 5 ml erneut auf die Säule gegeben. Nach dem erneuten Ablaufen der Tränklösung wurde der zurückbleibende Trägerkatalysator 20 h lichtgeschützt stehengelassen. Danach wurde kurz mit $N_2$ abgepreßt. Die hierbei ablaufende Tränklösung war orange gefärbt und wurde verworfen. Die Vorstufe war vollständig beladen (einheitliche tief-orange Färbung des Trägerkatalysators). Es wurde 3 x mit je 10 ml Pentan ohne Aufrühren gewaschen. Anschließend wurde im $N_2$-Strom (von Oben) getrocknet und es wurden je eine Katalysatorprobe von der Oberfläche (Probe 10a: Fließstrecke der Tränklösung ca. 0 mm), der Mitte (Probe 10b: Fließstrecke der Tränklösung ca. 25 mm) und dem unteren Bereich unmittelbar oberhalb des Frittenbodens (Probe 10c: Fließstrecke d. Tränklösung ca. 50 mm) genommen. Es wurden folgende Beladungen gefunden:

10a:0.36 w-% Zr/g ⇒ 39.5 µmol Metallocen/g Katalysator
10b:0.31 w-% Zr/g ⇒ 34.0 µmol Metallocen/g Katalysator
10c:0.30 w-% Zr/g ⇒ 32.9 µmol Metallocen/g Katalysator

Für den durchmischten Katalysator (5.5 g) wurde ein mittlerer Zr-Gehalt von 0.32 w-% bestimmt (35.4 µmol Metallocen/g Katalysator ⇒ Metallocenausnutzung: 78 %).

Aus der gefundenen Beladungshöhenverteilung wurden die Standardabweichung des Mittelwerts und die Schiefe s der Beladungshöhenverteilung für den Trägerkatalysator abgeleitet.

Für eine Funktion

$$f(x) = a \exp(-bx) + c \qquad \text{(mit } x = \text{Fließstrecke)}$$

wurden die Koeffizienten a, b und c bestimmt, mit denen sich ein Kurvenverlauf durch die drei oben angegebenen Meßpunkte ergibt (Fig. 1). Aus diesem mathematischen Zusammenhang von Beladungshöhe und Fließstrecke für den Trägerkatalysator ergab sich als 1. Moment (arithmetisches Mittel) $\mu_1$ = 34,7 µmol/g, als Standardabweichung $\sigma$ = 1,76 µmol/g (5,1 % bezogen auf $\mu_1$) und als Schiefe s = 1,049.

10.2: Polymerisation (1 l-Autoklav)

Beispiel 2.2 wurde mit 45 mg Trägerkatalysator aus Beispiel 10.1 wiederholt, wobei 194 g Polypropylengries

erhalten wurden (Produktivität: 4310 g PP/g Katalysator). Die anschließende Inspektion des Autoklaven zeigte keine Beläge oder Brocken.

Beispiel 11

Herstellung eines erfindungsgemäßen Metallocen-Trägerkatalysator

In einer inertisierten Schlenkfritte (Durchmesser: ca. 2 cm) wurden 5 g der in Beispiel 5 hergestellten Vorstufe (Porenvolumen: 1.0 ml/g) vorgelegt (ca. 5 cm Schichtdicke). In einem separaten Kolben wurden 240 mg (416 μmol) rac.-Dimethylsilylenbis(2-methylbenz[e]in-denyl)zirkondichlorid in 20 ml 1.53 molarer (bez. auf Al) MAO-Lösung (Fa. Witco: 10 w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach dem die überstehende Tränklösung abgelaufen war, wurde der zurückbleibende Trägerkatalysator 72 h lichtgeschützt stehengelassen. Danach wurde kurz mit $N_2$ abgepreßt. Die hierbei ablaufende Tränklösung war orange gefärbt und wurde verworfen. Die Vorstufe war vollständig beladen (einheitliche tief-orange Färbung des Trägerkatalysators). Es wurde 3 x mit je 10 ml Pentan ohne Aufrühren gewaschen. Anschließend wurde im $N_2$-Strom (von oben) getrocknet und es wurden je eine Katalysatorprobe von der Oberfläche (Probe 11a: Fließstrecke der Tränklösung ca. 0 mm), der Mitte (Probe 11b: Fließstrecke der Tränklösung ca. 25 mm) und dem unteren Bereich unmittelbar oberhalb des Frittenbodens (Probe 11c: Fließstrecke d. Tränklösung ca. 50 mm) genommen. Es wurden folgende Beladungen gefunden:

11a:0.68 w-% Zr/g ⇒ 74.6 μmol Metallocen/g Katalysator
11b: 0.49 w-% Zr/g ⇒ 53.7 μmol Metallocen/g Katalysator
11c: 0.36 w-% Zr/g ⇒ 39.5 μmol Metallocen/g Katalysator

Für den durchmischten Katalysator (5.6 g) wurde ein mittlerer Zr-Gehalt von 0.50 w-% bestimmt (54.8 μmol Metallocen/g Katalysator ⇒ Metallocenausnutzung: 74 %).

Aus der gefundenen Beladungshöhenverteilung wurden die Standardabweichung des Mittelwerts und die Schiefe s der Beladungshöhenverteilung für den Trägerkatalysator abgeleitet.

Für eine Funktion

$$f(x) = a \exp(-bx) + c \qquad \text{(mit } x = \text{Fließstrecke)}$$

wurden die Koeffizienten a, b und c bestimmt, mit denen sich ein Kurvenverlauf durch die drei oben angegebenen Meßpunkte ergibt (Fig. 2). Aus diesem mathematischen Zusammenhang von Beladungshöhe und Fließstrecke für den Trägerkatalysator ergab sich als 1. Moment (arithmetisches Mittel) $\mu_1$ = 54,8 μmol/g, als Standardabweichung $\sigma$ = 10,1 μmol/g (18,4 % bezogen auf $\mu_1$) und als Schiefe s = 0,262.

Beispiel 12: Chemische Trocknung von sprühgetrocknetem $SiO_2$ Nr. IV

1000 g sprühgetrocknetes Kieselgel (Mittlerer Teilchendurchmesser: 46 μm; Spez. Oberfläche: 311 $m^2$; Porenvolumen: 1.56 ml/g; 8 h bei 180°C im Vakuum (1 mbar) ausgeheizt) wurde in 5 l Toluol unter $N_2$-Atmosphäre suspendiert. Bei einer Temperatur von 18°C wurden 7.75 l (6.83 kg) 1.53 molare Methylaluminoxanlösung (in Toluol, Fa. Witco) über 120 Minuten zugegeben. Anschließend wurde 7 h bei RT nachgerührt, filtriert und der Filterkuchen 2 x mit je 2.5 l Toluol gewaschen. Danach wurde die Trägervorstufe im Vakuum getrocknet. Es wurden 1.36 kg chemisch getrocknete Vorstufe erhalten.

Beispiel 13

13.1: Herstellung eines erfindungsgemäßen Metallocen-Trägerkatalysators

In einer inertisierten Schlenkfritte (Durchmesser: ca. 2 cm) wurden 4.9 g der in Beispiel 12 hergestellten Vorstufe (Porenvolumen: 1.15 ml/g) vorgelegt (ca. 5 cm Schichtdicke). In einem separaten Kolben wurden 59 mg (98 μmol) rac.-Dimethylsilylenbis(2-ethylbenz[e]in-denyl)zirkondichlorid in 13 ml 1.53 molarer (bez. auf Al) MAO-Lösung (Fa. Witco: 10 w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach dem die überstehende Tränklösung abgelaufen war, wurde der zurückbleibende Trägerkatalysator 20 h lichtgeschützt stehengelassen. Danach wurde kurz mit $N_2$ abgepreßt. Die hierbei ablaufende, gefärbte Tränklösung wurde verworfen. Die Vorstufe war vollständig beladen

(einheitliche tief-orange Färbung des Trägerkatalysators). Es wurde 3 x mit je 100 ml Pentan gewaschen. Anschließend wurde im $N_2$-Strom (von Oben) getrocknet. Die Ausbeute betrug 5.4 g Trägerkatalysator (Zr-Gehalt: 9.8 µmol/g ⇒ Metallocen-Ausnutzung: 53.8 %).

13.2: Polymerisation (1 l-Autoklav)

Beispiel 2.2 wurde mit 140 mg Trägerkatalysator aus Beispiel 13.1 wiederholt, wobei 75 g Polypropylengries erhalten wurden (Produktivität: 535 g PP/g Katalysator). Die anschließende Inspektion des Autoklaven zeigte keine Beläge oder Brocken.

Beispiel 14

14.1: Herstellung eines erfindungsgemäßen Metallocen-Trägerkatalysators

In einer inertisierten Schlenkfritte (Durchmesser: ca. 2 cm) wurden 4.9 g der in Beispiel 12 hergestellten Vorstufe (Porenvolumen: 1.15 ml/g) vorgelegt (ca. 5 cm Schichtdicke). In einem separaten Kolben wurden 58 mg (98 µmol) rac.-Dimethylsilylenbis(2-methylbenz[e]tetrahydroindenyl)zirkondichlorid in 13ml 1.53 molarer (bez. auf Al) MAO-Lösung (Fa. Witco: 10 w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach dem die überstehende Tränklösung abgelaufen war, wurde der zurückbleibende Trägerkatalysator 20 h lichtgeschützt stehengelassen. Danach wurde kurz mit $N_2$ abgepreßt. Die hierbei ablaufende, gefärbte Tränklösung wurde verworfen. Die Vorstufe war vollständig beladen (einheitliche tief-orange Färbung des Trägerkatalysators). Es wurde 3x mit je 100 ml Pentan gewaschen. Anschließend wurde im $N_2$-Strom (von Oben) getrocknet. Die Ausbeute betrug 5.35 g Trägerkatalysator (Zr-Gehalt: 13.2 µmol/g ⇒ Metallocen-Ausnutzung: 71.8 %).

14.2: Polymerisation (1 l-Autoklav)

Beispiel 2.2 wurde mit 160 mg Trägerkatalysator aus Beispiel 14.1 wiederholt, wobei 180 g Polypropylengries erhalten wurden (Produktivität: 1125 g PP/g Katalysator). Die anschließende Inspektion des Autoklaven zeigte keine Beläge oder Brocken.

Beispiel 15

15.1: Herstellung eines erfindungsgemäßen Metallocen-Trägerkatalysators

In einer inertisierten Schlenkfritte (Durchmesser: ca. 2 cm) wurden 4.9 g der in Beispiel 12 hergestellten Vorstufe (Porenvolumen: 1.15 ml/g) vorgelegt (ca. 5 cm Schichtdicke). In einem separaten Kolben wurden 49 mg (98 µmol) rac.-Ethylenbis(2,4,7-trimethylindenyl)zirkondichlorid in 13 ml 1.53 molarer (bez. auf Al) MAO-Lösung (Fa. Witco: 10 w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach dem die überstehende Tränklösung abgelaufen war, wurde der zurückbleibende Trägerkatalysator 20 h lichtgeschützt stehengelassen. Danach wurde kurz mit $N_2$ abgepreßt. Die hierbei ablaufende, gefärbte Tränklösung wurde verworfen. Die Vorstufe war vollständig beladen (einheitliche tief-orange Färbung des Trägerkatalysators). Es wurde 3 x mit je 100 ml Pentan gewaschen. Anschließend wurde im $N_2$-Strom (von Oben) getrocknet. Die Ausbeute betrug 5.4 g Trägerkatalysator (Zr-Gehalt: 16.4 µmol/g ⇒ Metallocen-Ausnutzung: 90.6 %).

15.2: Polymerisation (1 l-Autoklav)

Beispiel 2.2 wurde mit 160 mg Trägerkatalysator aus Beispiel 15.1 wiederholt, wobei 125 g Polypropylengries erhalten wurden (Produktivität: 781 g PP/g Katalysator). Die anschließende Inspektion des Autoklaven zeigte keine Beläge oder Brocken.

Beispiel 16

16.1: Herstellung eines erfindungsgemäßen Metallocen-Trägerkatalysators

In einer inertisierten Schlenkfritte wurden 15 g der in Beispiel 12 hergestellten Vorstufe (Porenvolumen: 1.15 ml/g) vorgelegt. In einem separaten Kolben wurden 230 mg (375 µmol) rac.-Dimethylsilylenbis(2-methyl-4-phenyl-1-indenyl)zirkondichlorid in 60 ml 1.53 molarer (bez. auf Al) MAO-Lösung (Fa. Witco: 10 w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach dem die überstehende Tränklösung abgelaufen war, wurde der zurückbleibende Trägerkatalysator 20 h lichtgeschützt stehengelassen. Danach wurde kurz mit $N_2$ abgepreßt. Die hierbei ablaufende, gefärbte Tränklösung wurde verworfen. Die Vorstufe war vollständig beladen (einheitliche rote Färbung des Trägerkatalysators). Es wurde 4 x mit je ca. 100ml Pentan gewaschen. Anschließend wurde im $N_2$-Strom (von Oben) getrocknet. Die Ausbeute betrug 16.4 g Trägerkatalysator (Zr-Gehalt: 16.4 μmol/g ⇒ Metallocen-Ausnutzung: 71.9 %).

16.2: Polymerisation (10 l-Autoklav)

In einem trockenen, $N_2$-gespülten 10 l-Autoklaven wurden 30 mmol Triisobutylaluminium (TiBA; 15ml einer 2-molaren Lösung in Heptan) vorgelegt. Nach Zugabe von 150 mg Stadis® 450 (Stadis® 450 ist ein Produkt der Fa. DuPont) wurden 3500 g flüssiges Propen zudosiert. Anschließend wurden 750 mg des in Beispiel 16.1 hergestellten Metallocen-Träger-Katalysators über eine Schleuse mit $N_2$ eingeschossen, der Autoklav auf 60°C aufgeheizt und die Polymerisation bei dieser Temperatur durchgeführt. Nach 90' wurde die Polymerisation durch Ablassen des restlichen Propens abgebrochen und das Produkt durch ein Bodenventil abgelassen. Es wurden 1610 g Polypropylengries ohne Grobanteile erhalten (Produktivität: 2150 g PP/g Katalysator). Die anschließende Inspektion des Autoklaven zeigte keine Beläge oder Brocken.

Beispiel 17

17.1: Herstellung eines erfindungsgemäßen Metallocen-Trägerkatalysators (Beginn Co-Trägerungsreihe, reines Metallocen A))

In einer inertisierten Schlenkfritte (Durchmesser: ca. 2 cm) wurden 7 g der in Beispiel 12 hergestellten Vorstufe (Porenvolumen: 1.15 ml/g) vorgelegt. In einem separaten Kolben wurden 81 mg (140 μmol) rac.-Dimethylsilylenbis (2-methylbenz[e]indenyl)zirkondichlorid in 25 ml 1.53 molarer (bez. auf Al) MAO-Lösung (Fa. Witco: 10 w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach dem die überstehende Tränklösung abgelaufen war, wurde der zurückbleibende Trägerkatalysator 20 h lichtgeschützt stehengelassen. Danach wurde kurz mit $N_2$ abgepreßt. Die hierbei ablaufende, gefärbte Tränklösung wurde verworfen. Die Vorstufe war vollständig beladen (einheitliche Färbung des Trägerkatalysators). Es wurde 4x mit je ca. 100 ml Pentan gewaschen. Anschließend wurde im $N_2$-Strom (von oben) getrocknet. Die Ausbeute betrug 7.8 g Trägerkatalysator (Zr-Gehalt: 14.3 μmol/g ⇒ Metallocen-Ausnutzung: 79.4%).

17.2: Polymerisation (10 l-Autoklav)

In einem trockenen, $N_2$-gespülten 10 l-Autoklaven wurden 30mmol Triisobutylaluminium (TiBA; 15 ml einer 2-molaren Lösung in Heptan) vorgelegt. Nach Zugabe von 150 mg Stadis® 450 (Stadis® 450 ist ein Produkt der Fa. DuPont) wurden 3500 g flüssiges Propen zudosiert. Anschließend wurden 1000 mg des in Beispiel 17.1 hergestellten Metallocen-Träger-Katalysators über eine Schleuse mit $N_2$ eingeschossen, der Autoklav auf 60°C aufgeheizt und die Polymerisation bei dieser Temperatur durchgeführt. Nach 90' wurde die Polymerisation durch Ablassen des restlichen Propens abgebrochen und das Produkt durch ein Bodenventil abgelassen. Es wurden 2200 g Polypropylengries ohne Grobanteile erhalten (Produktivität: 2200 g PP/g Katalysator).

Polymerdaten: $M_n$ = 163000 g/mol; $M_w$ = 291000 g/mol; $M_w/M_n$ = 1.79; $T_m$ = 145.5°C

Beispiel 18

18.1: Herstellung eines erfindungsgemäßen Metallocen-Trägerkatalysators (Zwei unterschiedliche Metallocene, Coträgerung, Metallocenverhältnis Nr. 1)

In einer inertisierten Schlenkfritte (Durchmesser: ca. 2 cm) wurden 7 g der in Beispiel 12 hergestellten Vorstufe (Porenvolumen: 1.15 ml/g) vorgelegt. In einem separaten Kolben wurden 65 mg (113 μmol) rac.-Dimethylsilylenbis (2-methylbenz[e]indenyl)zirkondichlorid und 18 mg (29 μmol) rac.-Dimethylsilylenbis(2-methyl-4-phenyl-1-indenyl)zirkondichlorid in 25 ml 1.53 molarer (bez. auf Al) MAO-Lösung (Fa. Witco: 10w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach dem die überstehende Tränklösung abgelaufen war, wurde der zurückbleibende Trägerkatalysator 20 h lichtgeschützt stehengelassen. Danach wurde kurz mit $N_2$ abgepreßt. Die hierbei ablaufende, gefärbte Tränklösung wurde verworfen. Die Vorstufe war vollständig beladen (einheitliche Färbung des Trägerkatalysators). Es wurde 4x mit je ca. 100 ml Pentan gewaschen. Anschließend wurde im $N_2$-Strom (von Oben) getrocknet. Die Ausbeute betrug 7.8 g Trägerkatalysator (Zr-Gehalt: 16.4 µmol/g ⇒ Metallocen-Ausnutzung: 90.3%).

18.2: Polymerisation (10 l-Autoklav)

In einem trockenen, $N_2$-gespülten 10 l-Autoklaven wurden 30 mmol Triisobutylaluminium (TiBA; 15 ml einer 2-molaren Lösung in Heptan) vorgelegt. Nach Zugabe von 150 mg Stadis® 450 (Stadis® 450 ist ein Produkt der Fa. DuPont) wurden 3500 g flüssiges Propen zudosiert. Anschließend wurden 1100 mg des in Beispiel 18.1 hergestellten Metallocen-Träger-Katalysators über eine Schleuse mit $N_2$ eingeschossen, der Autoklav auf 60°C aufgeheizt und die Polymerisation bei dieser Temperatur durchgeführt. Nach 90' wurde die Polymerisation durch Ablassen des restlichen Propens abgebrochen und das Produkt durch ein Bodenventil abgelassen. Es wurden 1400 g Polypropylengries ohne Grobanteile erhalten (Produktivität: 1270 g PP/g Katalysator).

Polymerdaten: $M_n$ = 169000 g/mol; $M_w$ = 337000 g/mol; $M_w/M_n$ = 1.99; $T_m$ = 146.2°C

Beispiel 19

19.1: Herstellung eines erfindungsgemäßen Metallocen-Trägerkatalysators (Coträgerung Metallocenverhältnis Nr. 2)

In einer inertisierten Schlenkfritte (Durchmesser: ca. 2 cm) wurden 8.9 g der in Beispiel 12 hergestellten Vorstufe (Porenvolumen: 1.15 ml/g) vorgelegt. In einem separaten Kolben wurden 62 mg (107 µmol) rac.-Dimethylsilylenbis(2-methylbenz[e]indenyl)zirkondichlorid und 45 mg (72 µmol) rac.-Dimethylsilylenbis(2-methyl-4-phenyl-1-indenyl)zirkondichlorid in 32 ml 1.53 molarer (bez. auf Al) MAO-Lösung (Fa. Witco: 10w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach ca. 1 h wurde das abgelaufene Filtrat nochmals zurückgeführt und der Inhalt der Fritte wurde kurz aufgerührt. Nach dem erneuten Ablaufen der Tränklösung wurde der zurückbleibende Trägerkatalysator 20 h lichtgeschützt stehengelassen. Danach wurde kurz mit $N_2$ abgepreßt. Die hierbei ablaufende, gefärbte Tränklösung wurde verworfen. Die Vorstufe war vollständig beladen (einheitliche Färbung des Trägerkatalysators). Es wurde 4x mit je ca. 100 ml Pentan gewaschen. Anschließend wurde im $N_2$-Strom (von oben) getrocknet. Die Ausbeute betrug 9.8 g Trägerkatalysator (Zr-Gehalt: 14.3 µmol/g ⇒ Metallocen-Ausnutzung: 78%).

19.2: Polymerisation (10 l-Autoklav)

In einem trockenen, $N_2$-gespülten 10 l-Autoklaven wurden 30 mmol Triisobutylaluminium (TiBA; 15 ml einer 2-molaren Lösung in Heptan) vorgelegt. Nach Zugabe von 150 mg Stadis® 450 (Stadis® 450 ist ein Produkt der Fa. DuPont) wurden 3500g flüssiges Propen zudosiert. Anschließend wurden 710 mg des in Beispiel 19.1 hergestellten Metallocen-Träger-Katalysators über eine Schleuse mit $N_2$ eingeschossen, der Autoklav auf 60°C aufgeheizt und die Polymerisation bei dieser Temperatur durchgeführt. Nach 90' wurde die Polymerisation durch Ablassen des restlichen Propens abgebrochen und das Produkt durch ein Bodenventil abgelassen. Es wurden 1000 g Polypropylengries ohne Grobanteile erhalten (Produktivität: 1400 g PP/g Katalysator).

Polymerdaten: $M_n$ = 192000 g/mol; $M_w$ = 490000 g/mol; $M_w/M_n$ = 2.55; $T_m$ = 147.0°C

Beispiel 20

20.1: Herstellung eines erfindungsgemäßen Metallocen-Trägerkatalysators (Coträgerung, Metallocenverhältnis Nr. 3)

In einer inertisierten Schlenkfritte (Durchmesser: ca. 2 cm) wurden 7 g der in Beispiel 12 hergestellten Vorstufe (Porenvolumen: 1.15 ml/g) vorgelegt. In einem separaten Kolben wurden 32 mg (55 µmol) rac.-Dimethylsilylenbis(2-methylbenz[e]indenyl)zirkondichlorid und 54 mg (86 µmol) rac.-Dimethylsilylenbis(2-methyl-4-phenyl-1-indenyl)zirkondichlorid in 25 ml 1.53 molarer (bez. auf Al) MAO-Lösung (Fa. Witco: 10 w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach ca. 1 h wurde das abgelaufene Filtrat nochmals zurückgeführt und der Inhalt der Fritte wurde kurz aufgerührt. Nach dem erneuten Ablaufen der Tränklösung wurde der zurückbleibende Trägerkatalysator 20 h lichtgeschützt stehengelassen. Danach wurde kurz mit $N_2$ abgepreßt. Die hierbei ablaufende, gefärbte Tränklösung wurde verworfen. Die Vorstufe war vollständig beladen (einheitliche Färbung des Trägerkatalysators). Es wurde 4x mit je ca. 100 ml Pentan gewaschen. Anschließend wurde im $N_2$-Strom (von oben) getrocknet. Die Ausbeute betrug 7.7 g Trägerkatalysator (Zr-Gehalt: 14.3 µmol/g ⇒ Metallocen-Ausnutzung: 78%).

20.2: Polymerisation (10 l-Autoklav)

In einem trockenen, $N_2$-gespülten 10 l-Autoklaven wurden 30 mmol Triisobutylaluminium (TiBA; 15 ml einer 2-molaren Lösung in Heptan) vorgelegt. Nach Zugabe von 150 mg Stadis® 450 (Stadis® 450 ist ein Produkt der Fa. DuPont) wurden 3500 g flüssiges Propen zudosiert. Anschließend wurden 660 mg des in Beispiel 20.1 hergestellten Metallocen-Träger-Katalysators über eine Schleuse mit $N_2$ eingeschossen, der Autoklav auf 60°C aufgeheizt und die Polymerisation bei dieser Temperatur durchgeführt. Nach 90' wurde die Polymerisation durch Ablassen des restlichen Propens abgebrochen und das Produkt durch ein Bodenventil abgelassen. Es wurden 960g Polypropylengries ohne Grobanteile erhalten (Produktivität: 1450 g PP/g Katalysator).

Polymerdaten: $M_n$ = 225000 g/mol; $M_w$ = 646000 g/mol; $M_w/M_n$ = 2.88; $T_m$ = 147.6°C

Beispiel 21

21.1: Herstellung eines erfindungsgemäßen Metallocen-Trägerkatalysators (Coträgerung, Metallocenverhältnis Nr. 4)

In einer inertisierten Schlenkfritte (Durchmesser: ca. 2 cm) wurden 7 g der in Beispiel 12 hergestellten Vorstufe (Porenvolumen: 1.15 ml/g) vorgelegt. In einem separaten Kolben wurden 16 mg (28 µmol) rac.-Dimethylsilylenbis (2-methylbenz[e]indenyl)zirkondichlorid und 70 mg (111 µmol) rac.-Dimethylsilylenbis(2-methyl-4-phenyl-1-indenyl)zirkondichlorid in 30 ml 1.53 molarer (bez. auf Al) MAO-Lösung (Fa. Witco: 10w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach ca. 1 h wurde das abgelaufene Filtrat nochmals zurückgeführt und der Inhalt der Fritte wurde kurz aufgerührt. Nach dem erneuten Ablaufen der Tränklösung wurde der zurückbleibende Trägerkatalysator 20 h lichtgeschützt stehengelassen. Danach wurde kurz mit $N_2$ abgepreßt. Die hierbei ablaufende, gefärbte Tränklösung wurde verworfen. Die Vorstufe war vollständig beladen (einheitliche Färbung des Trägerkatalysators). Es wurde 4x mit je ca. 100 ml Pentan gewaschen. Anschließend wurde im $N_2$-Strom (von oben) getrocknet. Die Ausbeute betrug 7.8 g Trägerkatalysator (Zr-Gehalt: 13.2 µmol/g ⇒ Metallocen-Ausnutzung: 74%).

21.2: Polymerisation (10 l-Autoklav)

In einem trockenen, $N_2$-gespülten 10 l-Autoklaven wurden 30 mmol Triisobutylaluminium (TiBA; 15 ml einer 2-molaren Lösung in Heptan) vorgelegt. Nach Zugabe von 150 mg Stadis® 450 (Stadis® 450 ist ein Produkt der Fa. DuPont) wurden 3500 g flüssiges Propen zudosiert. Anschließend wurden 670 mg des in Beispiel 21.1 hergestellten Metallocen-Träger-Katalysators über eine Schleuse mit $N_2$ eingeschossen, der Autoklav auf 60°C aufgeheizt und die Polymerisation bei dieser Temperatur durchgeführt. Nach 90' wurde die Polymerisation durch Ablassen des restlichen Propens abgebrochen und das Produkt durch ein Bodenventil abgelassen. Es wurden 1000 g Polypropylengries ohne Grobanteile erhalten (Produktivität: 1500 g PP/g Katalysator).

Polymerdaten: $M_n$ = 237000 g/mol; $M_w$ = 720000 g/mol; $M_w/M_n$ = 3.04; $T_m$ = 148.0°C

Beispiel 22

22.1: Herstellung eines erfindungsgemäßen Metallocen-Trägerkatalysators (Ende der Coträgerreihe, reines Metallocen B)

In einer inertisierten Schlenkfritte (Durchmesser: ca. 2 cm) wurden 7 g der in Beispiel 12 hergestellten Vorstufe (Porenvolumen: 1.15 ml/g) vorgelegt. In einem separaten Kolben wurden 88 mg (140 µmol) rac.-Dimethylsilylenbis (2-methyl-4-phenyl-1-indenyl)zirkondichlorid in 30 ml 1.53 molarer (bez. auf Al) MAO-Lösung (Fa. Witco: 10w-% Methylaluminoxan in Toluol) gelöst. Nach 2-stündigem Nachrühren wurde die Lösung in die Schlenkfritte gegeben und die vorgelegte Vorstufe vorsichtig überschichtet. Nach ca. 1 h wurde das abgelaufene Filtrat nochmals zurückgeführt und der Inhalt der Fritte wurde kurz aufgerührt. Nach dem erneuten Ablaufen der Tränklösung wurde der zurückbleibende Trägerkatalysator 20 h lichtgeschützt stehengelassen. Danach wurde kurz mit $N_2$ abgepreßt. Die hierbei ablaufende, gefärbte Tränklösung wurde verworfen. Die Vorstufe war vollständig beladen (einheitliche Färbung des Trägerkatalysators). Es wurde 4x mit je ca. 100 ml Pentan gewaschen. Anschließend wurde im $N_2$-Strom (von oben) getrocknet. Die Ausbeute betrug 7.8 g Trägerkatalysator (Zr-Gehalt: 13.2 µmol/g ⇒ Metallocen-Ausnutzung: 74%).

22.2: Polymerisation (10 l-Autoklav)

In einem trockenen, $N_2$-gespülten 10 l-Autoklaven wurden 30 mmol Triisobutylaluminium (TiBA; 15 ml einer 2-molaren Lösung in Heptan) vorgelegt. Nach Zugabe von 150 mg Stadis® 450 (Stadis® 450 ist ein Produkt der Fa.

DuPont) wurden 3500 g flüssiges Propen zudosiert. Anschließend wurden 740 mg des in Beispiel 22.1 hergestellten Metallocen-Träger-Katalysators über eine Schleuse mit $N_2$ eingeschossen, der Autoklav auf 60°C aufgeheizt und die Polymerisation bei dieser Temperatur durchgeführt. Nach 90' wurde die Polymerisation durch Ablassen des restlichen Propens abgebrochen und das Produkt durch ein Bodenventil abgelassen. Es wurden 610 g Polypropylengries ohne Grobanteile erhalten (Produktivität: 820 g PP/g Katalysator).

Polymerdaten: $M_n$ = 408000 g/mol; $M_w$ = 1178000 g/mol; $M_w/M_n$ = 2.89; $T_m$ = 149.3°C

Beispiel 23: Chemische Trocknung von $SiO_2$ (Großmaßstab)

In einem trockenen, $N_2$-gespülten 300 l Prozeßfilter wurden 20.1 kg sprühgetrocknetes Kieselgel (Mittlerer Teilchendurchmesser: 46 µm; Spez. Oberfläche: 311 $m^2$; Porenvolumen: 1.56 ml/g; 8 h bei 130°C im Vakuum (30 mbar) ausgeheizt) vorgelegt und in 75 l Toluol suspendiert. Anschließend wurden 124 kg 1.53 molarer (bez. auf Al) MAO-Lösung (Fa. Witco: 10w-% Methylaluminoxan in Toluol) über 2 h so zudosiert, daß die Innentemperatur 35°C nicht überstieg. Nach vollständiger Zugabe wurde bei RT über Nacht nachgerührt, wozu der Prozeßfilter um 180° gedreht wurde.

Am nächsten Tag wurden Lösungsmittel und unumgesetztes MAO unter $N_2$-Druck abfiltriert und der zurückbleibende Feststoff einmal mit 60 l Toluol gewaschen. Anschließend wurde erneut abfiltriert und das chemisch getrocknete Kieselgel 16 h bei 35-40° Innentemperatur in einem $N_2$-Strom getrocknet.

Beispiel 24

24.1: Herstellung eines erfindungsgemäßen Metallocen-Trägerkatalysators

In einem trockenen, $N_2$-gespülten 300 l Rührbehälter wurden 0.98 kg (1.7 mol) *rac.*-Dimethylsilylenbis(2-methylbenz[e]indenyl)zirkondichlorid vorgelegt und bei RT in 124 kg 1.53 molarer (bez. auf Al) MAO-Lösung (Fa. Witco: 10 w-% Methylaluminoxan in Toluol) gelöst. Zwei Drittel der so erhaltene Lösung wurden auf das im Prozeßfilter mit möglichst ebener Oberfläche vorgelegte, chemisch getrocknete Kieselgel innerhalb von 3 h aufgesprüht, wobei der Ablauf des Prozeßfilters geöffnet blieb. Das letzte Drittel der Tränklösung wurde nicht mehr aufgesprüht, sondern direkt von Oben zu der überstehenden Tränklösung dosiert, ohne den vorgelegten Träger aufzuwirbeln. Nach vollständiger Zugabe der Tränklösung wurde der Ablauf geschlossen, der Inhalt 15' aufgerührt und dann über Nacht stehen gelassen. Am nächsten Tag wurde der Ablauf wieder geöffnet und die restliche Tränklösung zunächst drucklos, gegen Ende dann unter leichtem $N_2$-Druck, abfiltriert. Der zurückbleibende Feststoff wurde nach Aufsprühen von 60 l Pentan 1 h gerührt. Nach dem Abfiltrieren wurde noch zweimal mit je 60 l Pentan gewaschen und der zurückbleibende Trägerkatalysator dann im $N_2$-Strom getrocknet (2 h bei 35-40°C Innentemperatur und sehr langsamen Rühren). Die Ausbeute betrug 34.8 kg Metallocen-Trägerkatalysator (Zr-Gehalt: 36.2 µmol/g ⇒ Metallocen-Ausnutzung: 74%).

24.2: Polymerisation im kontinuierlichen Gasphasenverfahren

Der in Beispiel 24.1 hergestellte Metallocen-Trägerkatalysator wurde für die kontinuierliche Propen-Homopolymerisation in einem vertikal durchmischten 800 l Gasphasenreaktor eingesetzt. Der Reaktor enthält ein Bett aus feinteiligem Polymerisat und wurde bei einem konstanten Ausstoß von 100 kg/h betrieben. Der Reaktordruck betrug 24 bar und die Reaktortemperatur 63°C. Als Putzalkyl wurden 300 mmol Triisobutylaluminium pro Stunde zugefahren (1-molare Lösung in Heptan). Außerdem wurden 18.8 l $H_2$ pro Stunde zudosiert. Es wurde ein Polymergries mit einer Schüttdichte von 470 g/l, einer mittleren Partikelgröße von $d_{avg.}$ = 1.4 mm und 5.7w-% Partikel mit einem Durchmesser d > 2 mm erhalten (Polymerdaten: $T_m$: 147.7°C, [η]: 1.36 dl/g, MFI: 33.5 g/10', $X_L$: 0.5 w-%). Die Katalysatorproduktivität betrug 5.7 kg PP/g Katalysator.

- Beispiel V 1 belegt, daß bei zu geringem Volumen der Tränklösung kein vollständig beladener Katalysator erhältlich ist.
- Beispiele V 2 und V 3 belegen, daß das in der WO 94/28034 beschriebene Verfahren-nur bei niedriger Beladung verfahrenstaugliche Katalysatoren liefert.
- Beispiel V 4 belegt, daß bei Begrenzung des Tränklösungsvolumen auf das verfügbare Porenvolumen keine hohen Beladungen realisierbar sind und der erhaltene Trägerkatalysator zudem eine vglsw. geringe Produktivität besitzt.
- Beispiel 9 vs. V 6 belegt die bessere Wirtschaftlichkeit des neuen Verfahrens gegenüber dem in der EP 295312 und WO 98/01481 beschriebenen.
- Beispiel 7 belegt die Rezyklierbarkeit der gebrauchten Tränklösung
- Die Beispiele 10 und 11 belegen die unterschiedliche Beladung verschiedener Katalysatorpartikel und die Beeinflußbarkeit der Varianz der Beladungshöhenverteilung.

- Die Beispiele 13 - 16 belegen die universelle Anwendbarkeit des beschriebenen Verfahrens
- Die Beispiele 17 - 22 belegen die Eignung des beschriebenen Verfahrens für die Coträgerung unterschiedlicher Metallocene.

## Patentansprüche

1. Verfahren zur Herstellung eines metallhaltigen Trägerkatalysators für Polymerisationsverfahren oder einer metallhaltigen Trägerkatalysatorkomponente für Polymerisationsverfahren mit einer unterschiedlichen Beladungshöhe der einzelnen Trägerkatalysatorpartikel oder Trägerkatalysatorkomponentenpartikel durch Tränkung einer Trägersubstanz mit einer Tränklösung, die die Metallkomponente enthält, **dadurch gekennzeichnet, daß** die Tränklösung die Trägersubstanz in gerichteter Strömung durchströmt und das Volumen der Tränklösung mindestens das 1,5-fache des Porenvolumens des Trägers beträgt.

2. Verfahren nach Anspruch 1, **dadurch gekennzeichnet, daß** die Metallkomponente eine Übergangsmetallverbindung ist.

3. Verfahren nach Anspruch 1 oder 2 **dadurch gekennzeichnet, daß** die Metallkomponente eine Organoübergangsmetallverbindung ist.

4. Verfahren nach den Ansprüchen 1 bis 3, **dadurch gekennzeichnet, daß** die Metallkomponente eine Metallocenverbindung ist.

5. Verfahren nach den Ansprüchen 1 bis 4, **dadurch gekennzeichnet, daß** die Trägersubstanz eine anorganische Verbindung ist.

6. Verfahren nach den Ansprüchen 1 bis 5, **dadurch gekennzeichnet, daß** das Volumen der Tränklösung größer als das dreifache Porenvolumen der verwendeten Trägersubstanz ist.

7. Verfahren nach den Ansprüchen 1 bis 6, **dadurch gekennzeichnet, daß** die Trägersubstanz-Partikel, während sie von der Tränklösung durchströmt werden, praktisch in Ruhe sind.

8. Metallhaltiger Trägerkatalysator für Polymerisationsverfahren oder metallhaltige Trägerkatalysatorkomponente für Polymerisationsverfahren mit einer asymmetrischen Beladungshöhenverteilung, wobei die Beladungshöhe die Konzentration der eingesetzten Metallkomponenten in den einzelnen Trägerkatalysatorpartikeln oder Trägerkatalysatorkomponentenpartikeln ist, **dadurch gekennzeichnet, daß** die Beladungshöhenverteilung eine Standardabweichung von mindestens 1 % des 1. Momentes der Verteilung aufweist, sowie eine Schiefe s, die die Bedingung $s^2 \geq 0{,}0001$ erfüllt.

9. Metallhaltiger Trägerkatalysator für Polymerisationsverfahren oder metallhaltige Trägerkatalysatorkomponente für Polymerisationsverfahren mit einer asymmetrischen Beladungshöhenverteilung, wobei die Beladungshöhe die Konzentration der eingesetzten Metallkomponenten in den einzelnen Trägerkatalysatorpartikeln oder Trägerkatalysatorkomponentenpartikeln ist, **dadurch gekennzeichnet, daß** die Beladungshöhenverteilung eine Standardabweichung von mindestens 1 % des 1. Moments der Verteilung aufweist, sowie eine Schiefe s, die die Bedingung $s \geq +0.01$ erfüllt.

10. Metallhaltiger Trägerkatalysator oder metallhaltige Trägerkatalysatorkomponente nach Anspruch 8 oder 9, erhältlich nach einem Verfahren gemäß den Ansprüchen 1 bis 7.

11. Verfahren zur Herstellung von Polymeren, welchen Monomeren mit C-C-Doppelbindung und/oder C-C-Dreifachbindung zugrunde liegen, durch Polymerisation dieser Monomeren in Gegenwart eines metallhaltigen Trägerkatalysators oder einer metallhaltigen Trägerkatalysatorkomponente, die erhältlich sind nach einem Verfahren gemäß der Ansprüche 1 bis 7.

## Claims

1. A process for preparing a metal-containing supported catalyst for polymerization processes or a metal-containing

supported catalyst component for polymerization processes having a varying loading level of the individual particles of the supported catalyst or supported catalyst component by impregnation of a support material with an impregnation solution comprising the metal component, **characterized in that** the impregnation solution flows through the support material in a directed stream and the volume of the impregnation solution is at least 1.5 times the pore volume of the support.

**2.** A process as claimed in claim 1, **characterized in that** the metal component is a transition metal compound.

**3.** A process as claimed in claim 1 or 2, **characterized in that** the metal component is an organometallic compound of a transition metal.

**4.** A process as claimed in any of claims 1 to 3, **characterized in that** the metal component is a metallocene compound.

**5.** A process as claimed in any of claims 1 to 4, **characterized in that** the support material is an inorganic compound.

**6.** A process as claimed in any of claims 1 to 5, **characterized in that** the volume of the impregnation solution is greater than three times the pore volume of the support material used.

**7.** A process as claimed in any of claims 1 to 6, **characterized in that** the particles of support material are virtually at rest while the impregnation solution flows through them.

**8.** A metal-containing supported catalyst for polymerization processes of a metal-containing supported catalyst component for polymerization processes having an asymmetric loading level distribution, wherein the loading level is the concentration of the metal components used in the individual particles of the supported catalyst or supported catalyst component, **characterized in that** the loading level distribution has a standard deviation of at least 1% of the 1st moment of the distribution and a skewness s which meets the condition $s^2 \geq 0.0001$.

**9.** A metal-containing supported catalyst for polymerization processes of a metal-containing supported catalyst component for polymerization processes having an asymmetric loading level distribution, wherein the loading level is the concentration of the metal components used in the individual particles of the supported catalyst or supported catalyst component, **characterized in that** the loading level distribution has a standard deviation of at least 1% of the 1st moment of the distribution and a skewness s which meets the condition $s^2 \geq +0.01$.

**10.** A metal-containing supported catalyst or metal-containing supported catalyst component as claimed in claim 8 or 9 obtainable by a process as claimed in any of claims 1 to 7.

**11.** A process for preparing polymers based on monomers having a C-C double bond and/or a C-C triple bond by polymerization of these monomers in the presence of a metal-containing supported catalyst or a metal-containing supported catalyst component obtainable in each case by a process as claimed in any of claims 1 to 7.

## Revendications

**1.** Procédé de fabrication d'un catalyseur à support contenant des métaux pour des procédés de polymérisation ou d'un composant de catalyseur à support contenant des métaux pour des procédés de polymérisation ayant une hauteur de chargement différente des particules de catalyseurs à support ou des particules de composant de catalyseur à support individuelles par imprégnation d'une substance de support à l'aide d'une solution d'imprégnation, qui contient les composants métalliques, **caractérisé en ce que** la solution d'imprégnation traverse la substance de support en un écoulement dirigé et **en ce que** le volume de la solution d'imprégnation est au moins égal à 1,5 fois le volume de pores du support.

**2.** Procédé selon la revendication 1, **caractérisé en ce que** le composant métallique est un composé de métaux de transition.

**3.** Procédé selon la revendication 1 ou 2, **caractérisé en ce que** le composant métallique est un composé organique de métaux de transition.

4. Procédé selon les revendications 1 à 3, **caractérisé en ce que** le composé métallique est un composé de métallocène.

5. Procédé selon les revendications 1 à 4, **caractérisé en ce que** la substance de support est un composé inorganique.

6. Procédé selon les revendications 1 à 5, **caractérisé en ce que** le volume de la solution d'imprégnation est supérieur au triple du volume de pores de la substance de support utilisée.

7. Procédé selon les revendications 1 à 6, **caractérisé en ce que** les particules de la substance de support, lorsqu'elles sont traversées par la solution d'imprégnation, sont pratiquement au repos.

8. Catalyseur à support contenant des métaux pour des procédés de polymérisation ou composants de catalyseur à support contenant des métaux pour des procédés de polymérisation ayant une distribution asymétrique de hauteurs de chargement, la hauteur de chargement étant la concentration des composants métalliques utilisés dans les particules de catalyseur à support ou dans les particules de composant de catalyseur à support individuelles, **caractérisé en ce que** la distribution de hauteurs de chargement présente un écart-type d'au moins 1 % du 1^er^ moment de la distribution, ainsi qu'une obliquité s, qui remplit la condition $s^2 \geq 0,0001$.

9. Catalyseur à support contenant des métaux pour des procédés de polymérisation ou composants de catalyseur à support contenant des métaux pour des procédés de polymérisation, ayant une distribution asymétrique de hauteurs de chargement, la hauteur de chargement étant la concentration des composants métalliques utilisés dans les particules de catalyseur à support ou dans les particules de composant de catalyseur à support individuelles, **caractérisé en ce que** la distribution de hauteurs de chargement présente un écart-type d'au moins 1 % du 1^er^ moment de la distribution, ainsi qu'une obliquité s, qui remplit la condition $s \geq +0,01$.

10. Catalyseur à support contenant des métaux ou composant de catalyseur à support contenant des métaux selon la revendication 8 ou 9, que l'on obtient conformément à un procédé selon les revendications 1 à 7.

11. Procédé de fabrication de polymères, dont les monomères sont basés sur une liaison double C-C et/ou sur une liaison triple C-C, par polymérisation de ces monomères en présence d'un catalyseur à support contenant des métaux ou d'un composant de catalyseur à support contenant de métaux, que l'on obtient conformément à un procédé selon les revendications 1 à 7.

FIG.1

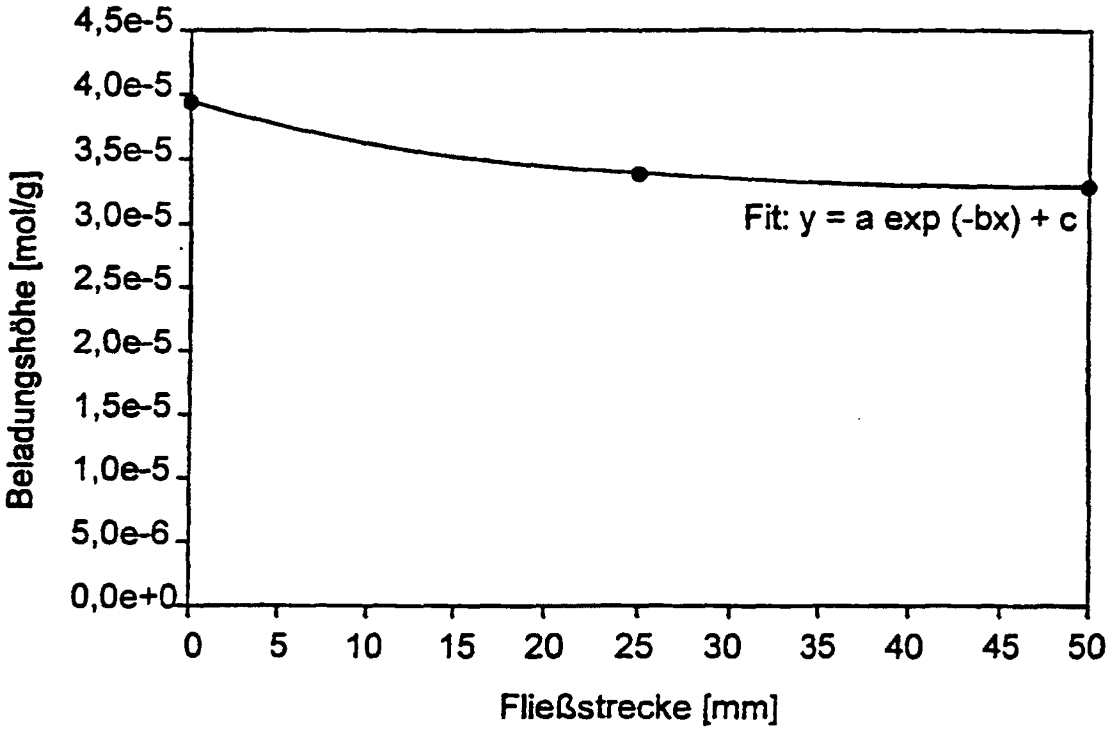
4,5e-5
4,0e-5
3,5e-5
3,0e-5
2,5e-5
2,0e-5
1,5e-5
1,0e-5
5,0e-6
0,0e+0
Beladungshöhe [mol/g]
Fit: y = a exp (-bx) + c
0
5
10
15
20
25
30
35
40
45
50
Fließstrecke [mm]

FIG.2

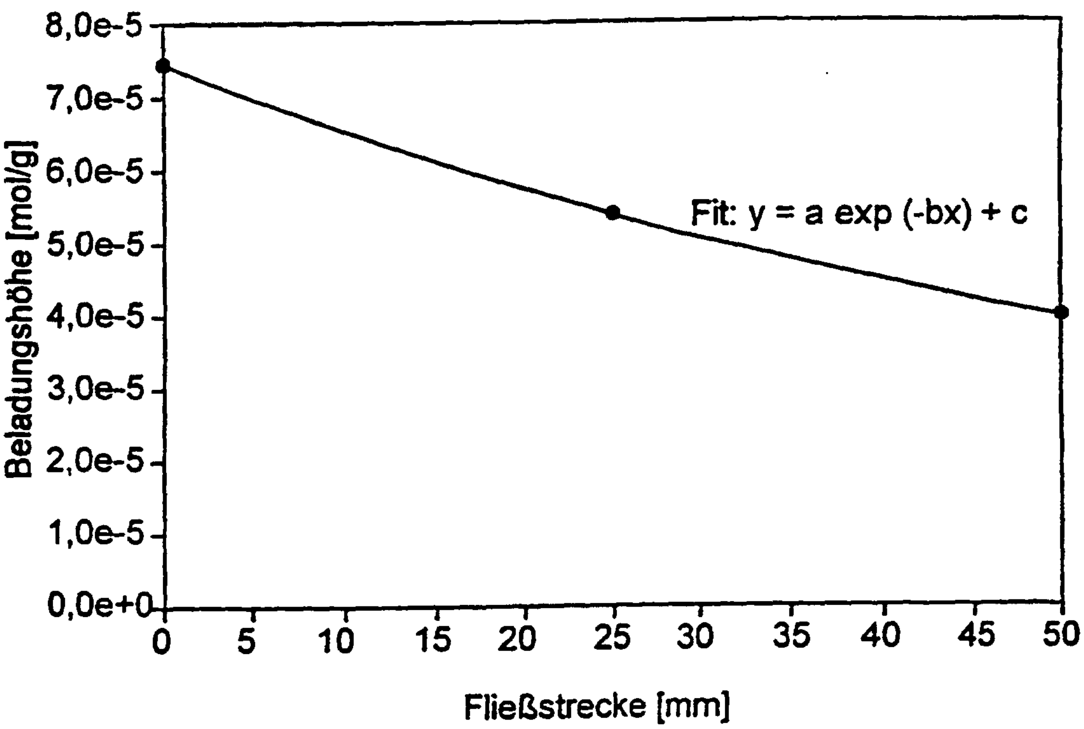
8,0e-5
7,0e-5
6,0e-5
5,0e-5
4,0e-5
3,0e-5
2,0e-5
1,0e-5
0,0e+0
Beladungshöhe [mol/g]
Fit: y = a exp (-bx) + c
0
5
10
15
20
25
30
35
40
45
50
Fließstrecke [mm]